# EUROPÄISCHE PATENTSCHRIFT

(11) **EP 3 339 518 B1**
(45) Veröffentlichungstag und Bekanntmachung des Hinweises auf die Patenterteilung: **03.04.2024**
(21) Anmeldenummer: 17207020.3
(22) Anmeldetag: 13.12.2017
(51) Int. Cl.: E03C 1/186, A47J 47/20

(54) **VERWENDUNG EINES SPÜLENZUBEHÖRTEILS ZUM ANORDNEN AN EINER SPÜLE**
USE OF A SINK ACCESSORY FOR FITTING TO A SINK
UTILISATION D'UN ACCESSOIRE D'ÉVIER DESTINÉ À ÊTRE PLACÉ SUR UN ÉVIER

(30) Priorität: 22.12.2016 DE 102016125501
(43) Veröffentlichungstag der Anmeldung: 27.06.2018
(73) Patentinhaber: BLANCO GmbH + Co KG, 75038 Oberderdingen (DE)
(72) Erfinder: Zver, Alexandra, 75236 Kämpfelbach (DE); Keller, Josef, 76149 Karlsruhe (DE)
(74) Vertreter: Hoeger, Stellrecht & Partner Patentanwälte mbB

(56) Entgegenhaltungen:
- DE-B3- 10 325 492
- GB-A- 656 219
- US-A- 1 986 935
- US-A- 2 005 459
- US-A- 2 045 965
- US-A- 3 625 162
- US-A1- 2009 139 023
- US-A1- 2011 056 016

## Beschreibung

Die vorliegende Erfindung betrifft eine Verwendung eines Spülenzubehörteils zum Anordnen an einer Spüle mit mindestens einem Becken in einer Arbeitsstellung, wobei das Spülenzubehörteil eine Kopplungsvorrichtung zum Ankoppeln des Spülenzubehörteils an eine Kopplungs-Seitenwand eines Beckens der Spüle in der Arbeitsstellung des Spülenzubehörteils umfasst.

Für die Becken von Spülen sind Spülenzubehörteile erhältlich, wie beispielsweise ein Schneidbrett, ein Abtropfrost oder ein Schale, die von oben in das Becken eingehängt oder auf einander gegenüberliegende Abschnitte eines Beckenrandes aufgelegt werden können.

Dabei wird das Spülenzubehörteil beispielsweise einerseits auf eine Armaturenbank der Spüle und andererseits auf einen horizontalen Randbereich des Beckens aufgelegt. Hierfür ist aber erforderlich, dass die vorderen und die hinteren Auflageflächen für das Spülenzubehörteil, insbesondere die Armaturenbank und der Beckenrandbereich, ein einheitliches Höhenniveau aufweisen.

Ferner ist es bekannt, ein Spülenzubehörteil an horizontalen Auflageflächen aufzulegen, welche an in den Seitenwänden des Beckens angeordneten Stufen vorgesehen sind. Hierfür ist eine aufwändige Gestaltung der betreffenden Seitenwände des Beckens erforderlich.

Ein Spülenzubehörteil kann auch an einem um das Becken umlaufenden Spülenrand aufgelegt werden. Auch hierfür ist erforderlich, dass der Spülenrand überall auf demselben Höhenniveau liegt.

Ferner ist es bekannt, ein Spülenzubehörteil auf einem Bodenbereich des Beckens der Spüle aufzustellen. Dies hat eine geringe Stabilität der Anordnung des Spülenzubehörteils an dem Becken und eine eingeschränkte Funktionalität des Spülenzubehörteils und des Beckens der Spüle zur Folge.

Bei den vorstehend erläuterten bekannten Anbindungen eines Spülenzubehörteils an ein Becken einer Spüle (abgesehen von dem Aufstellen des Spülenzubehörteils auf einem Bodenbereich des Beckens der Spüle) ist es erforderlich, dass die Spüle an allen Auflagebereichen, auf welche das jeweilige Spülenzubehörteil aufgelegt wird, ein einheitliches Höhenniveau aufweist.

Es gibt aber Spülen in Form von Trögen, bei denen die Armaturenbank und andere Abschnitte des Spülenrandes auf unterschiedlichen Höhenniveaus liegen. Hier ist eine Anbindung eines Spülenzubehörteils aufgrund des Niveauversatzes schwierig.

Ferner kann vorgesehen sein, dass die Spüle an einer Arbeitsplatte angeordnet ist, welche Teile des Spülenrandes überdeckt, so dass ein Höhenversatz zwischen der Oberseite der Arbeitsplatte einerseits und der Oberseite des Spülenrandes andererseits auftritt. Dabei hängt der Höhenversatz der Oberseite der Arbeitsplatte relativ zu dem unbedeckten Abschnitt des Spülenrandes von der Materialstärke der jeweils verwendeten Arbeitsplatte ab, was die Anbindung eines Spülenzubehörteils an die Spüle erschwert.

Die GB 656 219 A offenbart eine Verwendung eines Spülenzubehörteils zum Anordnen an einer Spüle gemäß dem Oberbegriff von Anspruch 1.

Die US 2 045 965 A offenbart eine Kombination aus einer Spüle mit einem Becken und einem Spülenzubehörteil zum Anordnen an der Spüle, wobei das Spülenzubehörteil eine gegen die Horizontale geneigte Abtropffläche und eine Kopplungsvorrichtung zum Ankoppeln des Spülenzubehörteils an eine Kopplungs-Seitenwand des Beckens der Spüle in einer Arbeitsstellung umfasst, wobei die Kopplungsvorrichtung ein inneres Kopplungselement, das in der Arbeitsstellung an eine dem Innenraum des Beckens zugewandte Innenseite der Kopplungs-Seitenwand anlegbar ist, und ein äußeres Kopplungselement, das in der Arbeitsstellung an eine dem Innenraum des Beckens abgewandte Außenseite der Kopplungs-Seitenwand anlegbar ist, umfasst und wobei das Spülenzubehörteil in der Arbeitsstellung mittels der Kopplungsvorrichtung nur an die Kopplungs-Seitenwand des Beckens der Spüle gekoppelt ist.

Die DE 103 25 492 B3, die US 1 986 935 A, die US 2011/056016 A1, die US 2009/139023 A1, die US 3 625 162 A und die US 2 005 459 A offenbaren Spülenzubehörteile, welche jeweils sowohl an die Innenseite als auch an die Außenseite einer Kopplungs-Seitenwand eines Beckens einer Spüle ankoppelbar sind.

Der vorliegenden Erfindung liegt die Aufgabe zugrunde, eine Verwendung eines Spülenzubehörteils der eingangs genannten Art zu schaffen, bei welcher das Spülenzubehörteil in einfacher und stabiler Weise an der Spüle positioniert werden kann, ohne dass hierfür an der Spüle oder an einer Arbeitsplatte, an welcher die Spüle angeordnet ist, mehrere horizontale Auflageflächen auf demselben Höhenniveau ausgebildet sein müssen und ohne dass die Funktionalität des Spülenzubehörteils oder der Spüle eingeschränkt wird.

Diese Aufgabe wird durch eine Verwendung nach Anspruch 1 gelöst.

Der vorliegenden Erfindung liegt das Konzept zugrunde, das Spülenzubehörteil in zumindest einer Arbeitsstellung des Spülenzubehörteils nicht an zwei einander gegenüberliegenden Seiten des Beckens an die Spüle oder an eine Arbeitsplatte, an welcher die Spüle angeordnet ist, anzukoppeln, sondern das Spülenzubehörteil mittels des inneren Kopplungselements und des äußeren Kopplungselements nur an eine einzige Kopplungs-Seitenwand des Beckens der Spüle anzukoppeln, so dass kein Ausgleich unterschiedlicher Höhenniveaus von einander gegenüberliegenden Seitenwänden des Beckens der Spüle oder von Bereichen der Arbeitsplatte, an welcher die Spüle angeordnet ist, erforderlich ist.

Dies bietet den Vorteil, dass ein oberer Rand der Kopplungs-Seitenwand einerseits und ein oberer Rand einer der Kopplungs-Seitenwand gegenüberliegenden weiteren Seitenwand des Beckens oder eine Oberseite einer Arbeitsplatte, welche eine der Kopplungs-Seitenwand gegenüberliegende Seitenwand des Beckens überdeckt, auf unterschiedlichen Höhenniveaus liegen können, ohne dass hierdurch die Ankopplung des Spülenzubehörteils an das Becken der Spüle erschwert wird.

Die Arbeitshöhe des Spülenzubehörteils über dem Bodenbereich des Beckens, in welcher das Spülenzubehörteil in der Arbeitsstellung an dem Becken der Spüle angekoppelt ist, kann allein über die Gestaltung der Kopplungs-Seitenwand bestimmt werden, ohne die Gestaltung der der Kopplungs-Seitenwand gegenüberliegenden Seitenwand des Beckens oder einer Arbeitsplatte, an welcher die Spüle angeordnet ist, zu berücksichtigen.

Die Kopplungs-Seitenwand ist vorzugsweise eine bei der Benutzung der Spüle dem Benutzer der Spüle zugewandte vordere Seitenwand des Beckens der Spüle.

Die Innenseite und die Außenseite der Kopplungs-Seitenwand sind vorzugsweise über einen Beckenrand des Beckens miteinander verbunden.

Die Kopplungs-Seitenwand kann massiv ausgebildet sein oder einen zwischen der Innenseite und der Außenseite angeordneten Hohlraum aufweisen.

Bei einer bevorzugten Ausgestaltung der Erfindung ist vorgesehen, dass das innere Kopplungselement in der Arbeitsstellung im Wesentlichen flächig an die Innenseite der Kopplungs-Seitenwand anlegbar ist und/oder dass das äußere Kopplungselement in der Arbeitsstellung im Wesentlichen flächig an die Außenseite der Kopplungs-Seitenwand anlegbar ist.

Das innere Kopplungselement und/oder das äußere Kopplungselemente können insbesondere als eine sich in einer Längsrichtung des Spülenzubehörteils erstreckende Leiste ausgebildet sein.

Alternativ oder ergänzend hierzu kann auch vorgesehen sein, dass das innere Kopplungselement in der Arbeitsstellung an einer oder mehreren, beispielsweise vier, Kontaktstrukturen, welche jeweils linienförmig oder punktförmig ausgebildet sind, an die Innenseite der Kopplungs-Seitenwand anlegbar ist und/oder dass das äußere Kopplungselement in der Arbeitsstellung an einer oder mehreren, beispielsweise vier, Kontaktstrukturen, welche jeweils linienförmig oder punktförmig ausgebildet sind, an die Außenseite der Kopplungs-Seitenwand anlegbar ist.

Das innere Kopplungselement und/oder das äußere Kopplungselement kann beispielsweise einen oder mehrere Stifte oder Zapfen umfassen, welche an die jeweils zugeordnete Seite der Kopplungs-Seitenwand anlegbar sind.

Vorzugsweise ist es möglich, das Spülenzubehörteil in seiner Arbeitsstellung längs seiner Längsrichtung, welche vorzugsweise mit einer Längsrichtung der Spüle übereinstimmt, relativ zu dem Becken der Spüle zu verschieben.

Das innere Kopplungselement und das äußere Kopplungselement sind an einem Grundkörper des Spülenzubehörteils angeordnet, welcher eine Auflagefläche aufweist.

Diese Auflagefläche ist in der Arbeitsstellung des Spülenzubehörteils horizontal ausgerichtet.

Das innere Kopplungselement und/oder das äußere Kopplungselement kann einstückig mit dem Grundkörper ausgebildet oder separat von dem Grundkörper hergestellt und an dem Grundkörper festgelegt sein.

Das innere Kopplungselement kann eine innere Anlagefläche aufweisen, und das äußere Kopplungselement kann eine äußere Anlagefläche aufweisen, wobei die innere Anlagefläche und die äußere Anlagefläche vorzugsweise so zueinander geneigt sind, dass der Abstand zwischen der inneren Anlagefläche und der äußeren Anlagefläche mit abnehmendem Abstand von dem Grundkörper abnimmt.

Hierdurch verjüngt sich eine von der inneren Anlagefläche und der äußeren Anlagefläche begrenzte Aufnahme für einen oberen Randbereich der Kopplungs-Seitenwand zu dem Grundkörper hin.

Die innere Anlagefläche und/oder die äußere Anlagefläche sind vorzugsweise gegenüber einer Normalenrichtung der Auflagefläche des Grundkörpers, welche vorzugsweise in der Arbeitsstellung des Spülenzubehörteils parallel zur Vertikalen ausgerichtet ist, geneigt.

Dabei beträgt die Neigung der inneren Anlagefläche und/oder der äußeren Anlagefläche gegenüber der Normalenrichtung der Auflagefläche vorzugsweise mindestens ungefähr 1°, insbesondere mindestens ungefähr 3°, besonders bevorzugt mindestens ungefähr 6°.

Ferner ist vorzugsweise vorgesehen, dass die Neigung der inneren Anlagefläche und/oder der äußeren Anlagefläche höchstens ungefähr 20°, insbesondere höchstens ungefähr 10°, besonders bevorzugt höchstens ungefähr 8°, beträgt.

Bei einer bevorzugten Ausgestaltung der Verwendung des Spülenzubehörteils ist vorgesehen, dass das Spülenzubehörteil ein zweites inneres Kopplungselement, das in einer zweiten Arbeitsstellung, in welcher das Spülenzubehörteil gegenüber der ersten Arbeitsstellung um einen Winkel von 180° gedreht ist, an die Innenseite der Kopplungs-Seitenwand anlegbar ist, und ein zweites äußeres Kopplungselement, das in der zweiten Arbeitsstellung an die Außenseite der Kopplungs-Seitenwand anlegbar ist, umfasst.

Auf diese Weise ist das Spülenzubehörteil reversibel ausgebildet, das heißt, es kann in zwei verschiedenen Arbeitsstellungen an dem Becken der Spüle angeordnet werden, wobei das Spülenzubehörteil in der zweiten Arbeitsstellung um einen Winkel von 180° gegenüber der ersten Arbeitsstellung gedreht ist.

Besonders günstig ist es, wenn das Spülenzubehörteil im Wesentlichen symmetrisch bezüglich einer Drehung um 180° um eine senkrecht zur Auflagefläche des Spülenzubehörteils durch dessen Schwerpunkt verlaufende Rotationsachse ausgebildet ist, und/oder wenn das Spülenzubehörteil im Wesentlichen spiegelsymmetrisch bezüglich einer parallel zur Längsrichtung des Spülenzubehörteils und senkrecht zur Auflagefläche des Spülenzubehörteils verlaufenden Längsmittelebene des Spülenzubehörteils ausgebildet ist.

Alternativ oder ergänzend hierzu kann vorgesehen sein, dass das Spülenzubehörteil in einer Querstellung, in welcher die Längsrichtung des Spülenzubehörteils um einen Winkel von 90° gegenüber der Arbeitsstellung gedreht ist, an dem Becken der Spüle anordenbar ist.

Zu diesem Zweck kann insbesondere vorgesehen sein, dass das Spülenzubehörteil eine erste Stirnseiten-Kopplungsvorrichtung zum Ankoppeln des Spülenzubehörteils an die Kopplungs-Seitenwand des Beckens der Spüle und eine zweite Stirnseiten-Kopplungsvorrichtung zum Ankoppeln des Spülenzubehörteils an eine der Kopplungs-Seitenwand des Beckens gegenüberliegende zweite Seitenwand des Beckens der Spüle umfasst.

In der Querstellung wird somit das Spülenzubehörteil nicht auf im Wesentlichen horizontale Auflageflächen an dem Becken, an einem das Becken umgebenden Bereich der Spüle oder an einer Arbeitsplatte, an welcher die Spüle angeordnet ist, aufgelegt, sondern direkt an zwei einander gegenüberliegenden Seitenwänden des Beckens, welche im montierten Zustand der Spüle vorzugsweise gegenüber der Vertikalen geneigt sind, angeordnet.

Dabei kann insbesondere vorgesehen sein, dass die erste Stirnseiten-Kopplungsvorrichtung mindestens eine erste Stirnseiten-Anlagefläche aufweist, welche in der Querstellung an die Innenseite der Kopplungs-Seitenwand des Beckens anlegbar ist, und die zweite Stirnseiten-Kopplungsvorrichtung mindestens eine zweite Stirnseiten-Anlagefläche aufweist, welche in der Querstellung an die Innenseite der der Kopplungs-Seitenwand gegenüberliegenden Seitenwand des Beckens anlegbar ist.

Das Spülenzubehörteil wird in diesem Fall zumindest teilweise in das Becken eingeführt und verklemmt sich zwischen der Kopplungs-Seitenwand und der der Kopplungs-Seitenwand gegenüberliegenden weiteren Seitenwand des Beckens, in einer durch die Abmessung des Spülenzubehörteils in dessen Längsrichtung vorgegebenen Arbeitshöhe.

Dabei sind die erste Stirnseiten-Kopplungsvorrichtung und/oder die zweite Stirnseiten-Kopplungsvorrichtung vorzugsweise durch Formschluss und/oder durch Kraftschluss, insbesondere durch Reibschluss, an die jeweils zugeordnete Seitenwand des Beckens ankoppelbar.

Die erste Stirnseiten-Anlagefläche und/oder die zweite Stirnseiten-Anlagefläche sind vorzugsweise gegenüber einer Normalenrichtung einer Auflagefläche eines Grundkörpers des Spülenzubehörteils, welche in der Querstellung des Spülenzubehörteils vorzugsweise parallel zur Vertikalen ausgerichtet ist, geneigt.

Dabei beträgt die Neigung der jeweiligen Stirnseiten-Anlagefläche gegenüber der Normalenrichtung der Auflagefläche des Grundkörpers des Spülenzubehörteils vorzugsweise mindestens ungefähr 1°, insbesondere mindestens ungefähr 3°, besonders bevorzugt mindestens ungefähr 6°.

Ferner ist vorzugsweise vorgesehen, dass die Neigung der betreffenden Stirnseiten-Anlagefläche gegenüber der Normalenrichtung der Auflagefläche des Grundkörpers des Spülenzubehörteils höchstens ungefähr 20°, insbesondere höchstens ungefähr 10°, besonders bevorzugt höchstens ungefähr 8°, beträgt. Das Spülenzubehörteil ist als ein Schneidbrett ausgebildet.

Das Spülenzubehörteil ist vorgesehen zum Bereitstellen einer Auflagefläche, mit einer in der Arbeitsstellung des Spülenzubehörteils horizontal ausgerichteten Auflagefläche, an einem Becken der Spüle, wobei das Spülenzubehörteil mittels der Kopplungsvorrichtung an eine Kopplungs-Seitenwand des Beckens gekoppelt ist.

Auf die durch das Spülenzubehörteil bereitgestellte Auflagefläche können beliebige Gegenstände, beispielsweise Geschirrteile und/oder Besteckteile, aufgelegt werden.

Bei der erfindungsgemäßen Verwendung kann ferner eine Arbeitsplatte verwendet werden, an welcher die Spüle angeordnet ist.

Dabei ist vorzugsweise vorgesehen, dass die Arbeitsplatte die oberen Randbereiche von einer, zwei oder drei Seitenwänden des Beckens zumindest teilweise, besonders bevorzugt im Wesentlichen vollständig, überdeckt.

Die Spüle ist vorzugsweise als eine Küchenspüle ausgebildet.

Besonders günstig ist es, wenn eine Unterseite des Grundkörpers einen dem Grundkörper zugewandten oberen Rand des inneren Kopplungselements und einen dem Grundkörper zugeordneten oberen Rand des äußeren Kopplungselement miteinander verbindet und
wobei die Unterseite des Grundkörpers in der Arbeitsstellung des Spülenzubehörteils von der Kopplungs-Seitenwand des Beckens, insbesondere von einem Beckenrand an der Oberseite der Kopplungs-Seitenwand, beabstandet ist.

Auf diese Weise ist es möglich, bei der Herstellung des Beckens der Spüle und/oder bei der Herstellung des Spülenzubehörteils entstehende Fertigungstoleranzen auszugleichen, so dass das Spülenzubehörteil stets problemlos an die Kopplungs-Seitenwand des Beckens angekoppelt werden kann.

Der Bereich der Kopplungs-Seitenwand, an welchen das Spülenzubehörteil in der Arbeitsstellung angekoppelt ist, kann im Wesentlichen glatt und/oder im Wesentlichen eben und/oder stufenfrei ausgebildet sein.

Es kann aber auch vorgesehen sein, dass der Bereich der Kopplungs-Seitenwand, an welchen das Spülenzubehörteil in der Arbeitsstellung angekoppelt ist, eine Stufe aufweist, wobei dann vorzugsweise an dem zugeordneten Kopplungselement eine hierzu komplementäre Stufe vorgesehen ist.

Ferner kann vorgesehen sein, dass der Bereich der Kopplungs-Seitenwand, an welchen das Spülenzubehörteil in der Arbeitsstellung angekoppelt ist, eine raue Oberfläche aufweist, wodurch vorzugsweise eine Klemmwirkung zwischen dem Spülenzubehörteil und der Kopplungs-Seitenwand verstärkt wird.

Besonders günstig ist es, wenn das Spülenzubehörteil in der Arbeitsstellung nicht mit einem Bodenbereich des Beckens der Spüle in Kontakt steht.

Durch die Ankopplung des Spülenzubehörteils in der Arbeitsstellung nur an die Kopplungs-Seitenwand des Beckens und an keine andere Seitenwand, mittels der Kopplungsvorrichtung, ist eine sichere, stabile Funktion des Spülenzubehörteils an oder in dem Becken gewährleistet.

Das Spülenzubehörteil kann außer in der an das Becken angekoppelten Arbeitsstellung oder Querstellung zusätzlich auch auf einer Arbeitsplatte, beispielsweise als ein Topfuntersetzer, oder auf dem Bodenbereich des Beckens, beispielsweise als ein Rost, genutzt werden.

Das Spülenzubehörteil kann in verschiedenen Positionen relativ zu dem Becken an das Becken angekoppelt werden.

Insbesondere ist es möglich, das Spülenzubehörteil im Wesentlichen mittig an der Kopplungs-Seitenwand des Beckens zu positionieren.

Das Spülenzubehörteil kann aber auch gegenüber einer mittigen Position an der Kopplungs-Seitenwand versetzt, beispielsweise nach links oder nach rechts versetzt, an das Becken angekoppelt werden.

Das Spülenzubehörteil wird vorzugsweise im Wesentlichen flächig an eine vordere Kopplungs-Seitenwand des Beckens der Spüle gekoppelt.

Es wird vorzugsweise dadurch an die Kopplungs-Seitenwand angekoppelt, dass es einen oberen Randbereich der Kopplungs-Seitenwand an der dem Innenraum des Beckens zugewandten Innenseite und an der dem Innenraum des Beckens abgewandten Außenseite mit zwei Kontaktelementen, vorzugsweise in Form von zwei Längsleisten, passgenau umschließt.

Das Design und die Funktion des Spülenzubehörteils ermöglichen eine sichere Benutzung des Spülenzubehörteils, beispielsweise in Form eines Schneidbretts, über dem Becken.

Auch wenn nur an der dem Benutzer zugewandten vorderen Seitenwand des Beckens ein freier, nicht von einer Arbeitsplatte überdeckter Beckenrand zur Verfügung steht, kann das Spülenzubehörteil dennoch, vorzugsweise mit seiner Längsrichtung parallel zur Längserstreckung der vorderen Seitenwand des Beckens, sicher positioniert werden.

Insbesondere mittels der vorstehend erwähnten Stirnseiten-Kopplungsvorrichtungen kann das Spülenzubehörteil auch in einer Querstellung an das Becken angekoppelt werden, insbesondere an die Kopplungs-Seitenwand und an eine der Kopplungs-Seitenwand gegenüberliegende weitere Seitenwand des Beckens.

Ferner kann das Schneidbrett auch, insbesondere über Abstützelemente, beispielsweise aus einem Elastomermaterial, auf der Arbeitsplatte oder einer Tischplatte aufgestellt werden.

Die Neigung der äußeren Anlagefläche des äußeren Kopplungselements und der inneren Anlagefläche des inneren Kopplungselements gegenüber der Normalenrichtung der Auflagefläche des Spülenzubehörteils entspricht vorzugsweise im Wesentlichen der Neigung der Innenseite der Kopplungs-Seitenwand beziehungsweise der Neigung der Außenseite der Kopplungs-Seitenwand in deren oberem Randbereich gegenüber der Vertikalen, im montierten Zustand der Spüle.

Der kleinste Abstand zwischen dem inneren Kopplungselement und dem äußeren Kopplungselement in der Querrichtung des Spülenzubehörteils ist vorzugsweise kleiner als die kleinste horizontale Ausdehnung des Beckenrandes im Bereich der Kopplungs-Seitenwand, an der Oberseite der Kopplungs-Seitenwand, im montierten Zustand der Spüle.

Hierdurch kann ein Ausgleich der Fertigungstoleranzen von Spüle und Spülenzubehörteil erfolgen.

Das innere Kopplungselement und das äußere Kopplungselement und deren Verbindung mit dem Grundkörper des Spülenzubehörteils weisen eine ausreichende Stabilität auf, um die Auflagefläche des Spülenzubehörteils in der Arbeitsstellung auch bei Belastung des Spülenzubehörteils im Gebrauch desselben stabil zu halten.

Wenn das Spülenzubehörteil in der Arbeitsstellung an dem Becken angeordnet ist, weisen das innere Kopplungselement und das äußere Kopplungselement eine ausreichend große vertikale Ausdehnung auf, um ein Verkippen des Spülenzubehörteils relativ zu der Kopplungs-Seitenwand des Beckens zu verhindern.

Das Spülenzubehörteil ist durch das Einhängen an dem oberen Randbereich der Kopplungs-Seitenwand des Beckens, insbesondere der vorderen Seitenwand des Beckens, sicher über dem Innenraum des Beckens positioniert. Dies ermöglicht die Nutzung des Spülenzubehörteils insbesondere an einer Spüle in Form eines Trogs, bei welchem der Beckenrand an der vorderen Seitenwand einerseits und an der der vorderen Seitenwand gegenüberliegenden hinteren Seitenwand andererseits auf unterschiedlichen Höhenniveaus liegt.

Bei Ankopplung an die vordere Seitenwand des Beckens befindet sich das Spülenzubehörteil in der Arbeitsstellung vorteilhafterweise in der Nähe des Benutzers, welchem die vordere Seitenwand des Beckens zugewandt ist.

Da das Spülenzubehörteil als Schneidbrett ausgebildet ist, kann es bei Aufstellung desselben auf der Arbeitsplatte ein Brückenschneidbrett darstellen.

Das Format des Spülenzubehörteils als Schneidbrett ist handlich und ergonomisch.

Die Geometrie, insbesondere die Abmessungen, des Spülenzubehörteils lässt sich leicht an andere Dimensionen des Beckens der Spüle anpassen.

Wenn das Spülenzubehörteil über mindestens eine Stirnseiten-Kopplungsvorrichtung mit gegenüber der Normalenrichtung der Auflagefläche des Spülenzubehörteils geneigten Stirnseiten-Anlageflächen verfügt, kann das Spülenzubehörteil zum Trocknen auf diesen Stirnseiten-Anlageflächen abgestellt und somit insbesondere schräg gegen eine hinter der Spüle angeordnete Rückwand gelehnt werden.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine perspektivische Darstellung eines Beckens einer Spüle, insbesondere einer Küchenspüle, dessen oberer Rand an drei Seiten von einer Arbeitsplatte überdeckt ist, und eines an dem Becken angeordneten Spülenzubehörteils in Form eines Schneidbretts, das in einer Arbeitsstellung, in welcher eine Längsrichtung des Spülenzubehörteils mit einer Längsrichtung der Spüle übereinstimmt, mit einer Kopplungsvorrichtung an eine vordere Kopplungs-Seitenwand des Beckens angekoppelt ist;
- Fig. 2: eine weitere perspektivische Darstellung der Kombination aus Spüle, Arbeitsplatte und Spülenzubehörteil aus Fig. 1, mit der Blickrichtung parallel zu den Langseiten des Beckens;
- Fig. 3: eine Draufsicht von oben auf die Kombination aus Spüle, Arbeitsplatte und Spülenzubehörteil aus den Fig. 1 und 2;
- Fig. 4: einen vertikalen Schnitt durch die Kombination aus Spüle, Arbeitsplatte und Spülenzubehörteil aus den Fig. 1 bis 3, längs der Linie 4 - 4 in Fig. 3;
- Fig. 5: eine vergrößerte Darstellung des Bereichs I aus Fig. 4;
- Fig. 6: einen vertikalen Schnitt durch die Kombination aus Spüle, Arbeitsplatte und Spülenzubehörteil aus den Fig. 1 bis 3, längs der Linie 6 - 6 in Fig. 3;

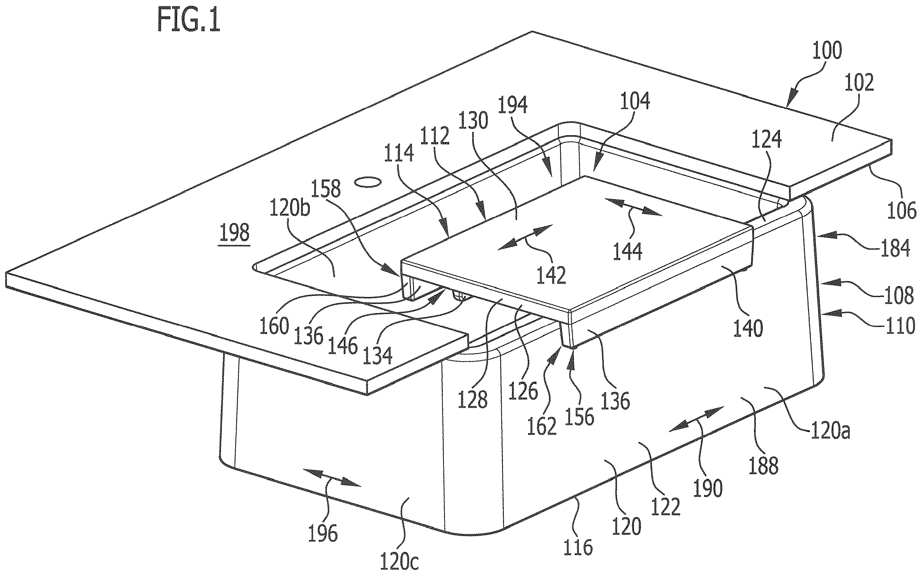

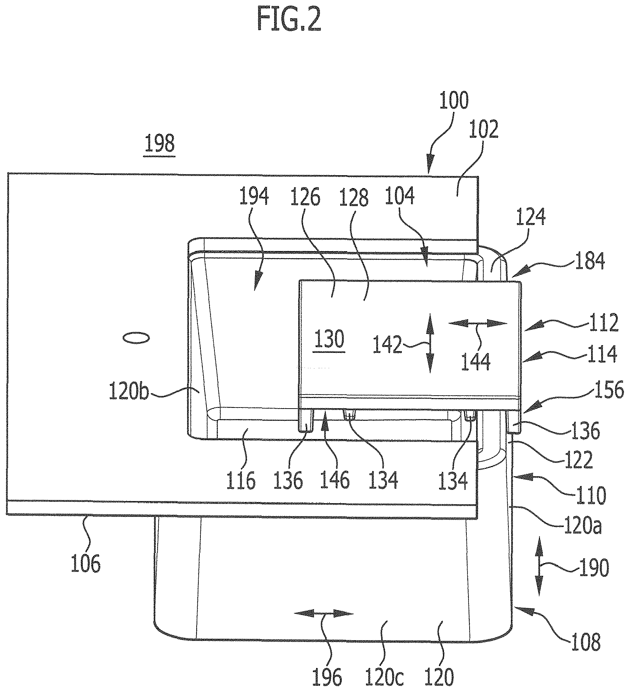

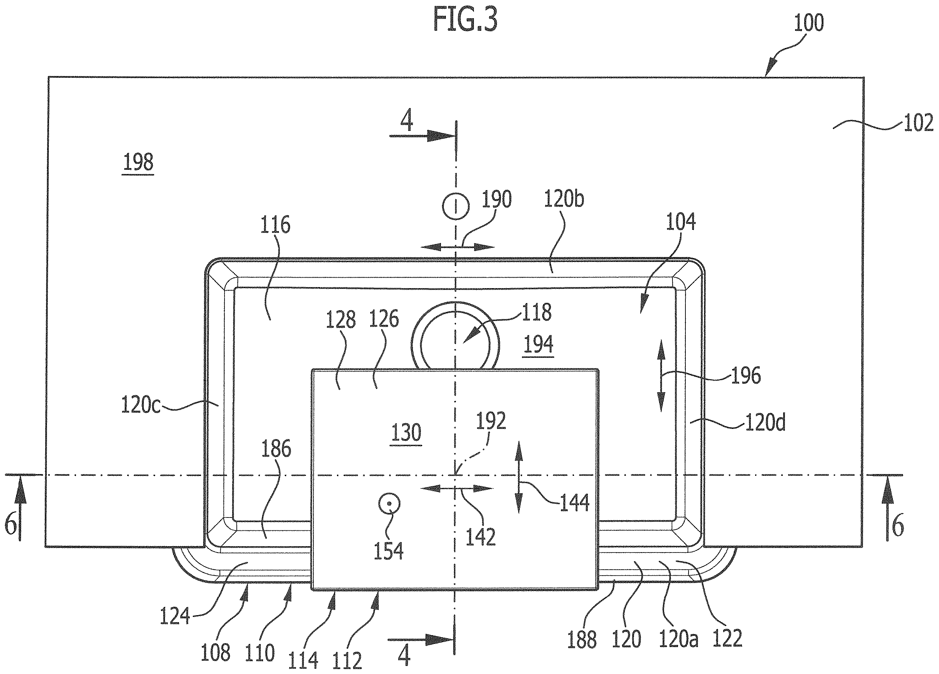

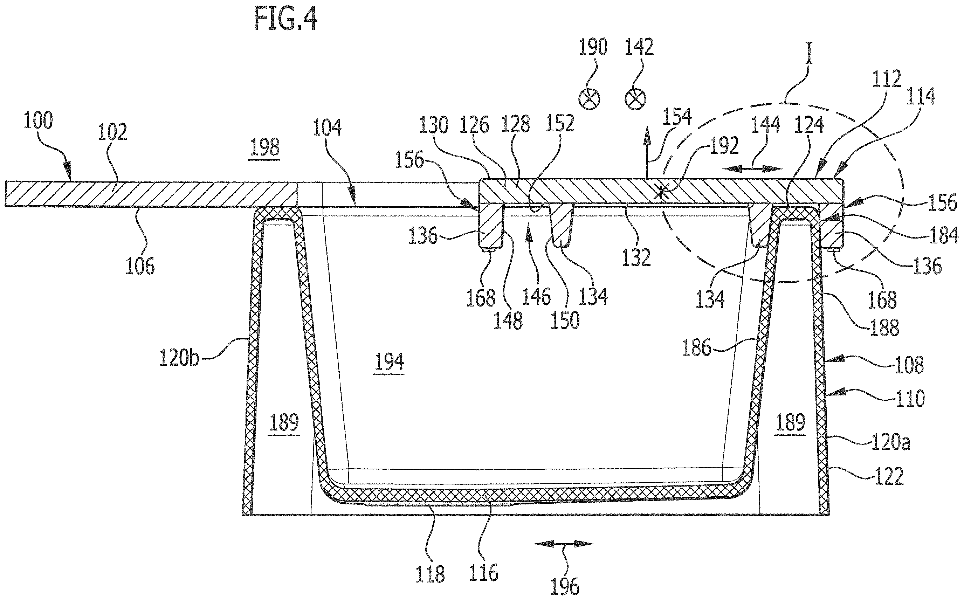

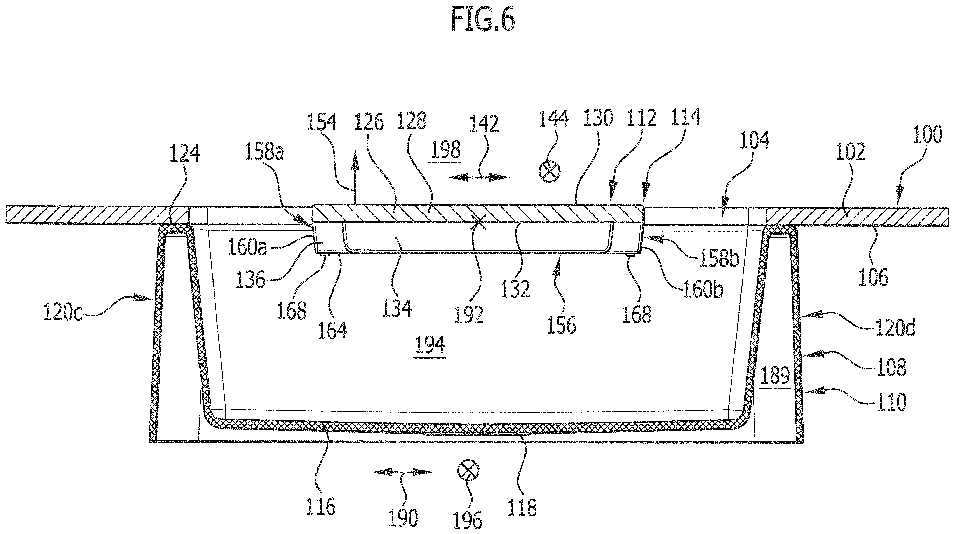

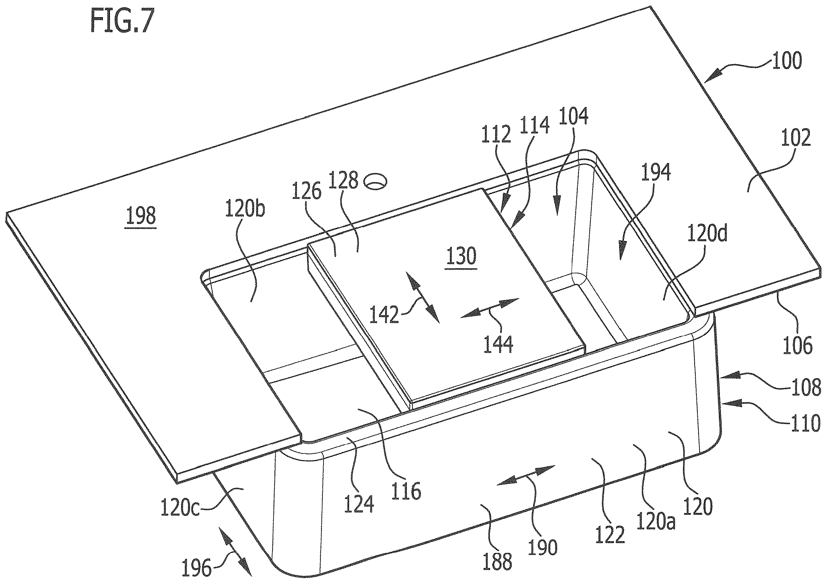

- Fig. 7: eine perspektivische Darstellung der Kombination aus Spüle, Arbeitsplatte und Spülenzubehörteil aus den Fig. 1 bis 6, wobei das Spülenzubehörteil in einer Querstellung, in welcher die Längsrichtung des Spülenzubehörteils um einen Winkel von 90° gegenüber der in den Fig. 1 bis 6 dargestellten Arbeitsstellung gedreht ist, an dem Becken der Spüle angeordnet ist, wobei das Spülenzubehörteil mit einer ersten Stirnseiten-Kopplungsvorrichtung an die vordere Kopplungs-Seitenwand des Beckens und mit einer zweiten Stirnseiten-Kopplungsvorrichtung an eine der Kopplungs-Seitenwand gegenüberliegende weitere Seitenwand des Beckens der Spüle gekoppelt ist; diese Verwendung ist nicht beansprucht.
- Fig. 8: eine weitere perspektivische Darstellung der Kombination aus Spüle, Arbeitsplatte und Spülenzubehörteil aus Fig. 7, mit der Blickrichtung parallel zu den Langseiten des Beckens;
- Fig. 9: eine Draufsicht von oben auf die Kombination aus Spüle, Arbeitsplatte und Spülenzubehörteil aus den Fig. 7 und 8;
- Fig. 10: einen vertikalen Schnitt durch die Kombination aus Spüle, Arbeitsplatte und Spülenzubehörteil aus den Fig. 7 bis 9, längs der Linie 10 - 10 in Fig. 9;
- Fig. 11: eine vergrößerte Darstellung des Bereichs II aus Fig. 10;
- Fig. 12: einen vertikalen Schnitt durch die Kombination aus Spüle, Arbeitsplatte und Spülenzubehörteil aus den Fig. 7 bis 9, längs der Linie 12 - 12 in Fig. 9;
- Fig. 13: eine perspektivische Darstellung der Spüle aus den Fig. 1 bis 12 ohne die Arbeitsplatte und ohne das Spülenzubehörteil;
- Fig. 14: eine Draufsicht von oben auf die Spüle aus Fig. 13;
- Fig. 15: eine perspektivische Darstellung des Spülenzubehörteils aus den Fig. 1 bis 12, mit Blick auf eine Oberseite des Spülenzubehörteils;
- Fig. 16: eine perspektivische Darstellung des Spülenzubehörteils aus Fig. 15, mit Blick auf eine Unterseite des Spülenzubehörteils;
- Fig. 17: eine Draufsicht von oben auf das Spülenzubehörteil aus den Fig. 15 und 16;
- Fig. 18: eine Draufsicht von unten auf das Spülenzubehörteil aus den Fig. 15 bis 17;
- Fig. 19: eine Vorderansicht des Spülenzubehörteils aus den Fig. 15 bis 18, mit der Blickrichtung in Richtung des Pfeiles 19 in Fig. 17;
- Fig. 20: eine Seitenansicht des Spülenzubehörteils aus den Fig. 15 bis 19, mit der Blickrichtung in Richtung des Pfeiles 20 in Fig. 17;
- Fig. 21: eine perspektivische Darstellung eines Abstützelements des Spülenzubehörteils aus den Fig. 15 bis 20;
- Fig. 22: eine Seitenansicht des Abstützelements aus Fig. 21;
- Fig. 23: eine Draufsicht von oben auf das Abstützelement aus den Fig. 21 und 22, mit der Blickrichtung in Richtung des Pfeiles 23 in Fig. 22; und
- Fig. 24: eine Draufsicht von unten auf das Abstützelement aus den Fig. 21 bis 23, mit der Blickrichtung in Richtung des Pfeiles 24 in Fig. 22.

Gleiche oder funktional äquivalente Elemente sind in allen Figuren mit denselben Bezugszeichen bezeichnet.

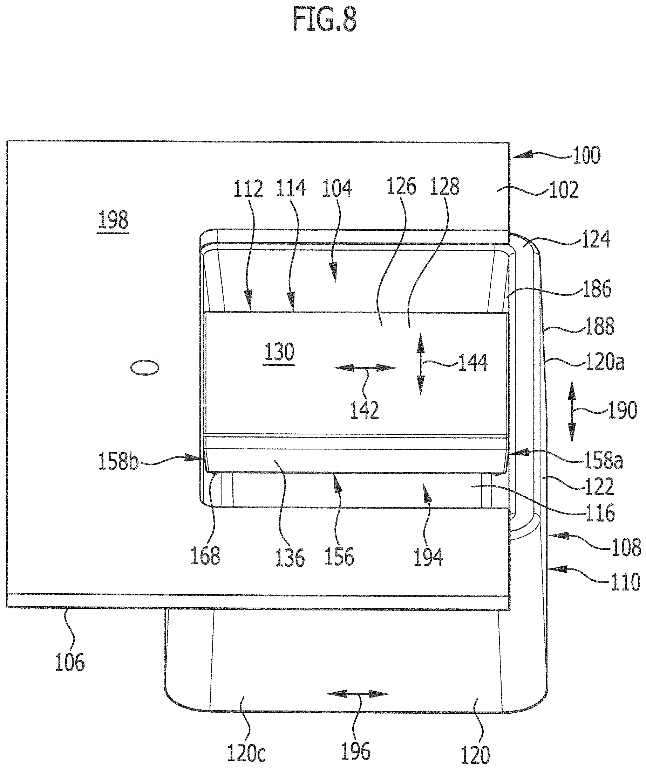

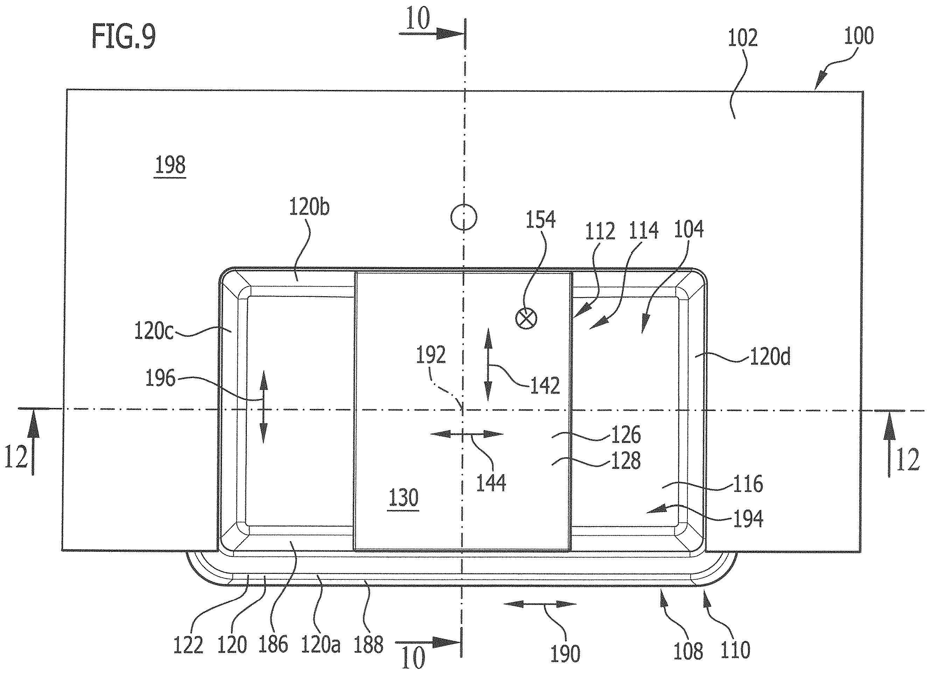

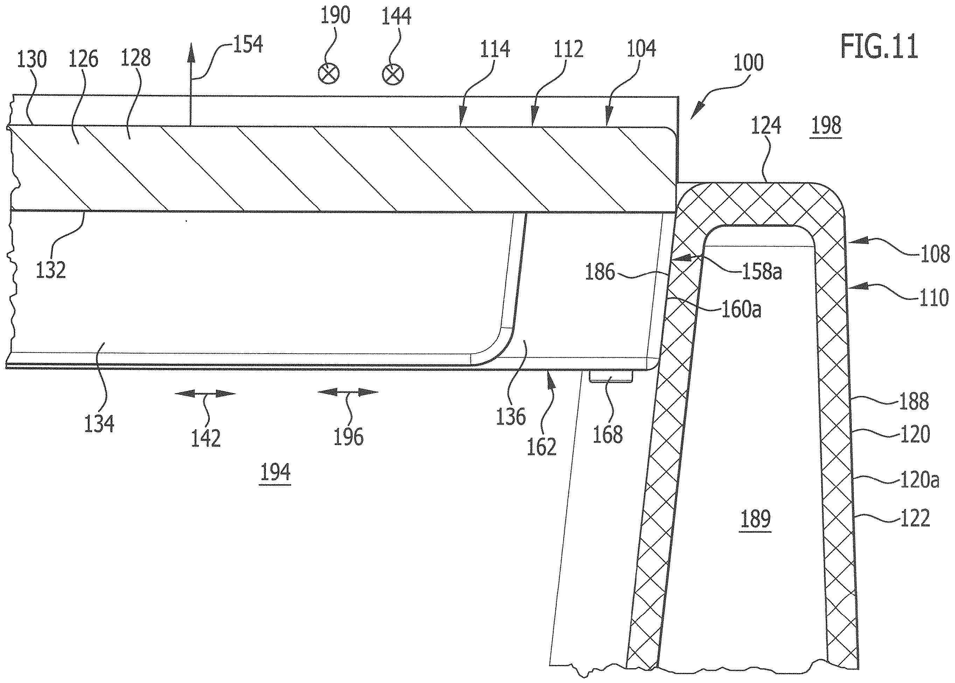

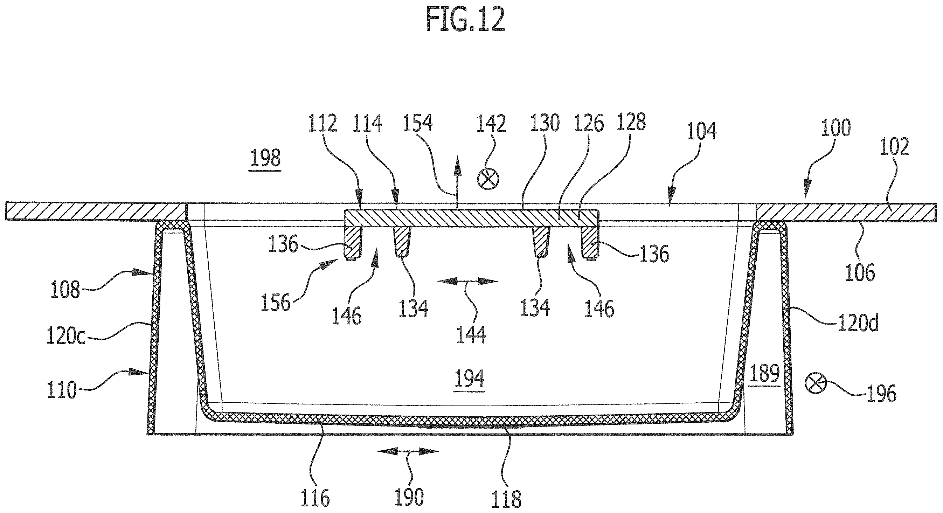

Eine in den Fig. 1 bis 12 dargestellte Kombination 100 umfasst eine Arbeitsplatte 102 mit einem Arbeitsplattenausschnitt 104, eine an einer Unterseite 106 der Arbeitsplatte 102 angeordnete Spüle 108 mit einem Becken 110 und ein an dem Becken 110 anordenbares Spülenzubehörteil 112, das bei dieser Ausführungsform als ein Schneidbrett 114 ausgebildet ist.

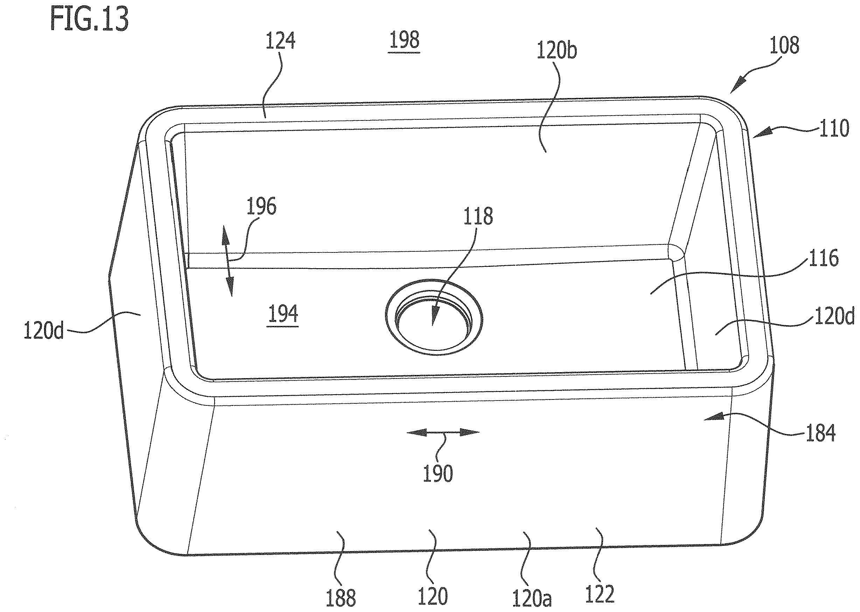

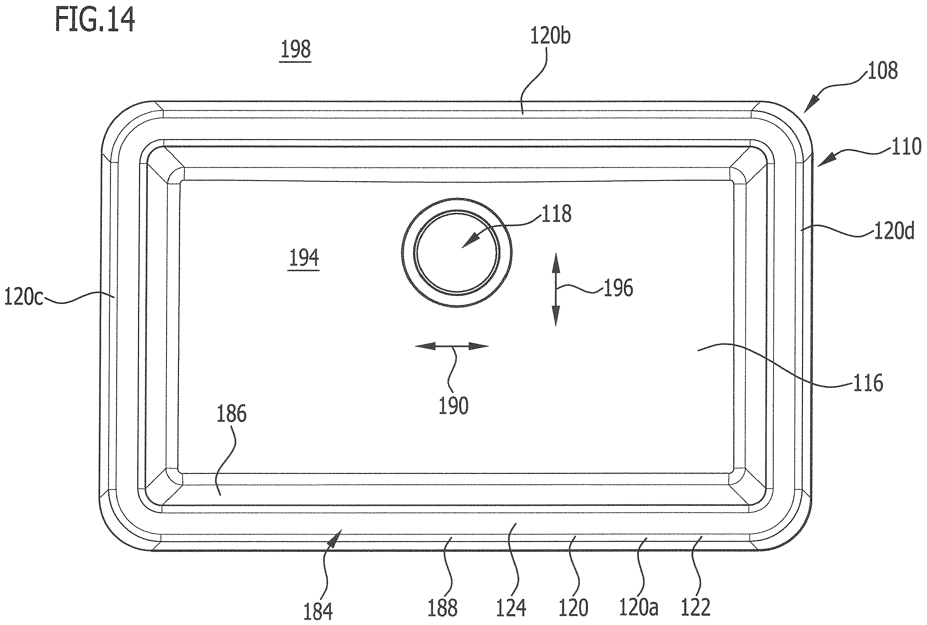

Das in den Fig. 13 und 14 einzeln dargestellte Becken 110 umfasst einen Bodenbereich 116, in dem eine Beckenabflussöffnung 118 vorgesehen ist, sowie sich von dem Bodenbereich 116 nahezu vertikal nach oben erstreckende Seitenwände 120, insbesondere eine vordere erste Seitenwand 120a, welche bei diesem Ausführungsbeispiel als Kopplungs-Seitenwand 122 dient, eine der Kopplungs-Seitenwand 122 gegenüberliegende hintere zweite Seitenwand 120b, eine linke Seitenwand 120c und eine rechte Seitenwand 120d, wobei die linke Seitenwand 120c und die rechte Seitenwand 120d die Kopplungs-Seitenwand 122 und die Seitenwand 120b miteinander verbinden.

Ferner umfasst das Becken 110 einen längs der oberen Ränder der Seitenwände 120 umlaufenden, im Wesentlichen horizontal ausgerichteten Beckenrand 124.

Das Becken 110 ist vorzugsweise einstückig ausgebildet.

Das Becken 110 kann grundsätzlich aus einem beliebigen Material gebildet sein, beispielsweise aus einem Edelstahlmaterial, einem Keramikmaterial, einem Kunststoffmaterial oder einem Verbundmaterial.

Die Spüle 108 kann außer dem mindestens einen Becken 110 noch weitere Becken und/oder eine oder mehrere Abtropfflächen umfassen.

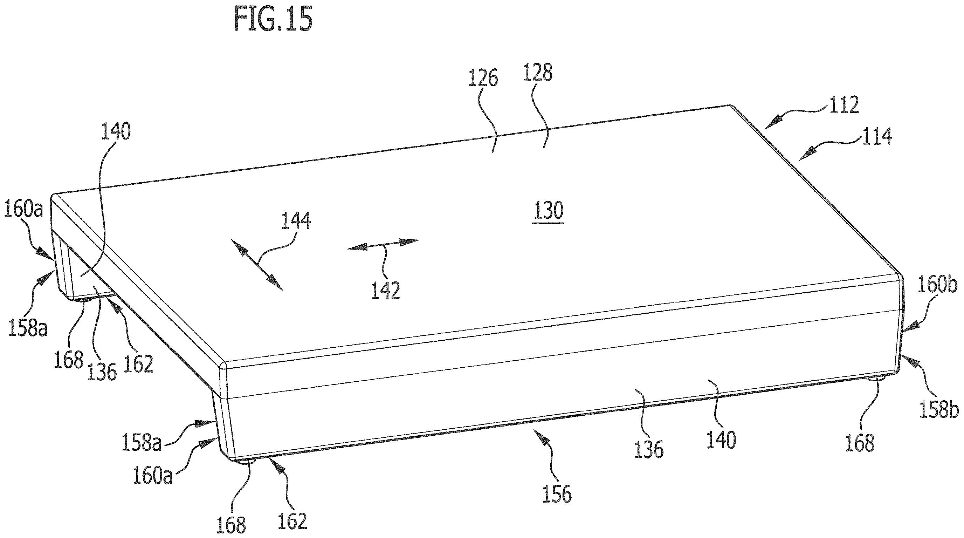

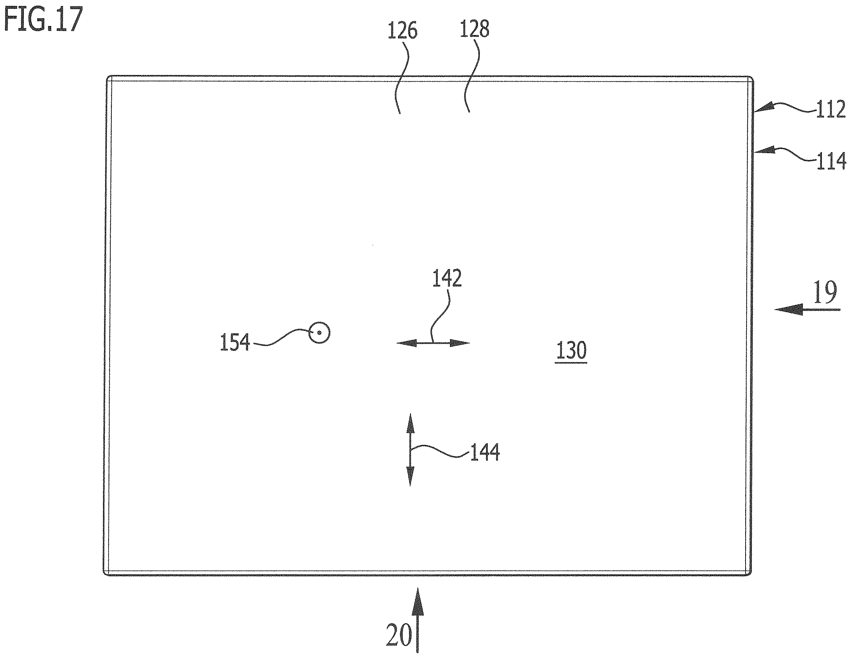

Das in Fig. 15 bis 20 einzeln dargestellte Spülenzubehörteil 112, das in Form eines Schneidbretts 114 ausgebildet ist, umfasst einen Grundkörper 126, welcher seinerseits eine - vorzugsweise im Wesentlichen quaderförmige - Basisplatte 128 umfasst, deren Oberseite eine Auflagefläche 130 des Spülenzubehörteils 112 bildet.

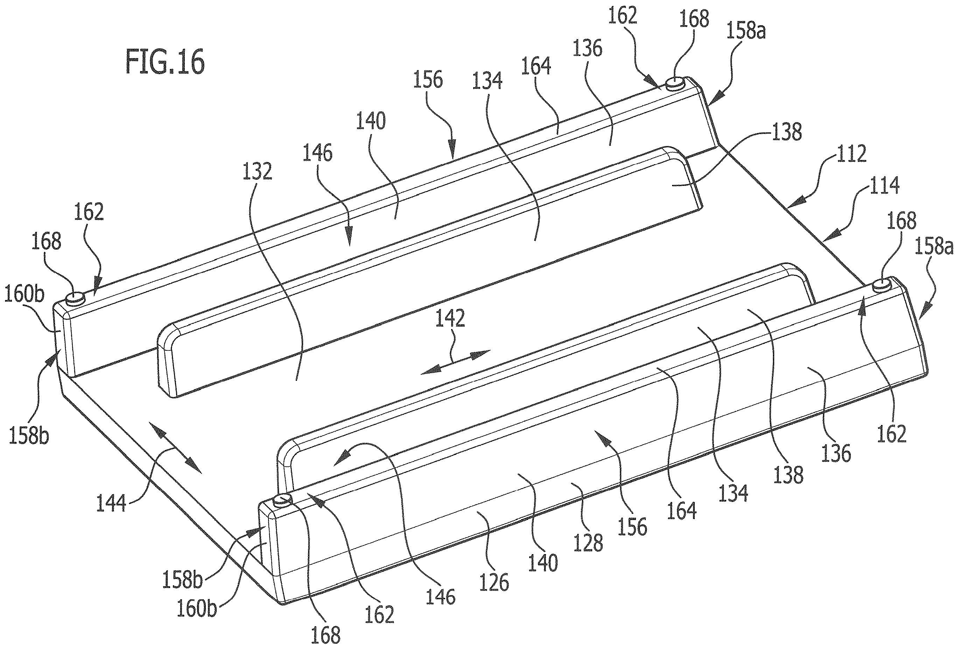

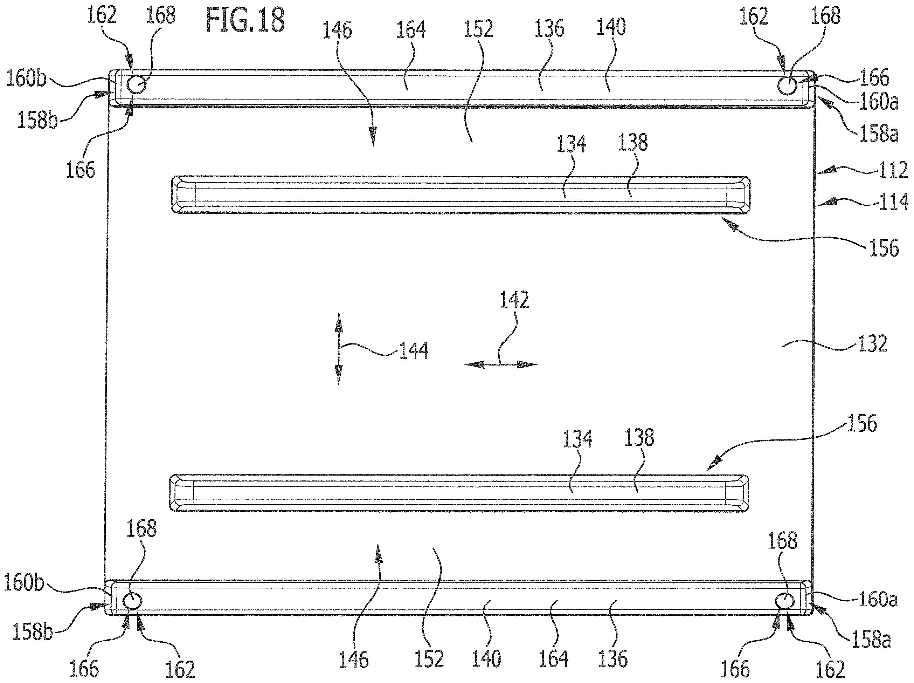

An einer der Auflagefläche 130 abgewandten Unterseite 132 der Basisplatte 128 (siehe insbesondere die Fig. 16 und 18) sind zwei innere Kopplungselemente 134 und zwei äußere Kopplungselemente 136 angeordnet, welche jeweils als Leisten 138 beziehungsweise 140 ausgebildet sind und sich jeweils in einer Längsrichtung 142 des Spülenzubehörteils 112 erstrecken und in einer senkrecht zur Längsrichtung 142 des Spülenzubehörteils 112 und vorzugsweise parallel zur Auflagefläche 130 verlaufenden Querrichtung 144 des Spülenzubehörteils 112 voneinander beabstandet sind.

Insbesondere verlaufen die beiden äußeren Kopplungselemente 136 jeweils längs einer Außenkante der Basisplatte 128, vorzugsweise längs jeweils einer Langseite der Basisplatte 128.

Jeweils ein inneres Kopplungselement 134 verläuft parallel zur Längsrichtung 142 im Abstand von dem jeweils benachbarten äußeren Kopplungselement 136.

In dem dargestellten Ausführungsbeispiel sind die inneren Kopplungselemente 134 kürzer ausgebildet als die äußeren Kopplungselemente 136.

Grundsätzlich kann aber auch vorgesehen sein, dass die inneren Kopplungselemente 134 gleich lang ausgebildet sind wie die äußeren Kopplungselemente 136, oder die inneren Kopplungselemente 134 können länger ausgebildet sein als die äußeren Kopplungselemente 136.

Jeweils ein äußeres Kopplungselement 136 und das demselben zugeordnete, benachbarte innere Kopplungselement 134 begrenzen zusammen mit dem Grundkörper 126 eine Aufnahme 146 für einen oberen Randbereich einer der Seitenwände 120, insbesondere der vorderen Kopplungs-Seitenwand 122.

Diese Aufnahme 146 wird durch eine dem inneren Kopplungselement 134 zugewandte äußere Anlagefläche 148 des jeweiligen äußeren Kopplungselements 136, durch eine dem äußeren Kopplungselement 136 zugewandte innere Anlagefläche 150 des inneren Kopplungselements 134 und durch einen die äußere Anlagefläche 148 mit der inneren Anlagefläche 150 verbindenden Bereich 152 der Unterseite 132 des Grundkörpers 126 begrenzt.

Der Grundkörper 126 und/oder die Kopplungselemente 134 und/oder 136 können beispielsweise aus einem Holzmaterial (beispielsweise stabverleimtes Holz) oder aus einem Kunststoffmaterial gebildet sein.

Die Kopplungselemente 134, 136 können beispielsweise mittels Dübeln, Schrauben und/oder durch Verklebung an dem Grundkörper 126 festgelegt sein.

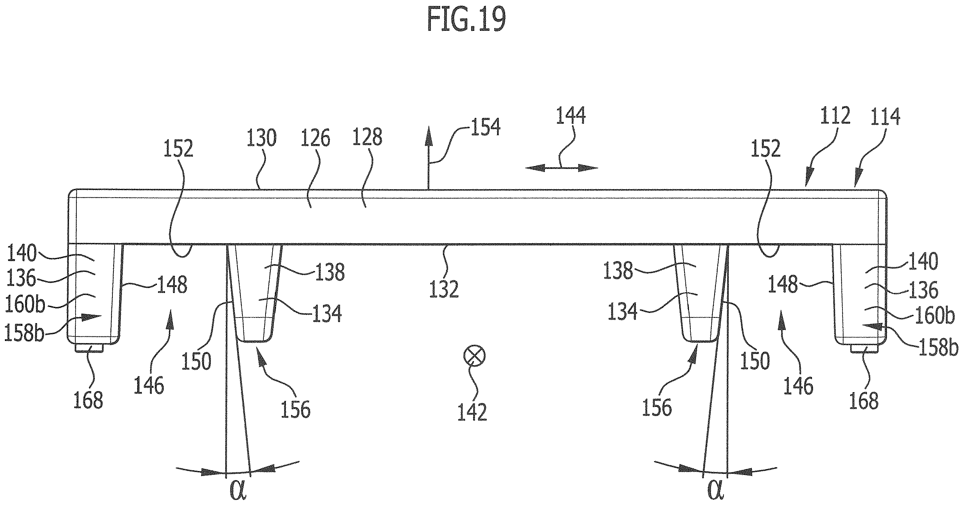

Wie am besten aus Fig. 19 zu ersehen ist, kann jedes Kopplungselement 134 oder 136 einen im Wesentlichen rechteckigen Querschnitt oder einen im Wesentlichen trapezförmigen Querschnitt aufweisen.

Vorzugsweise weist ein äußeres Kopplungselement 136 einen im Wesentlichen rechteckigen Querschnitt auf, während ein inneres Kopplungselement 134 vorzugsweise einen trapezförmigen Querschnitt aufweist, wobei insbesondere vorgesehen sein kann, dass die Dicke des Kopplungselements 134 sich mit abnehmenden Abstand von dem Grundkörper 126 vergrößert.

Wenn die Auflagefläche 130 des Spülenzubehörteils 112 horizontal ausgerichtet ist, so ist die innere Anlagefläche 150 eines inneren Kopplungselements 134 vorzugsweise um einen Winkel α gegenüber der Vertikalen geneigt, wobei eine Normalenrichtung 154 der Auflagefläche 130 in dieser Stellung des Spülenzubehörteils 112 parallel zur Vertikalen ausgerichtet ist (siehe Fig. 19).

Der Winkel α beträgt dabei vorzugsweise mindestens ungefähr 1°, insbesondere mindestens ungefähr 3°, besonders bevorzugt mindestens ungefähr 6°, und/oder vorzugsweise höchstens ungefähr 20°, insbesondere höchstens ungefähr 10°, besonders bevorzugt höchstens ungefähr 8°.

Jeweils ein inneres Kopplungselement 134 und ein demselben benachbartes äußeres Kopplungselement 136 bilden eine Kopplungsvorrichtung 156 zum Ankoppeln des Spülenzubehörteils 112 an die Kopplungs-Seitenwand 122 des Beckens 110 in einer Arbeitsstellung des Spülenzubehörteils 112.

Bei der dargestellten Ausführungsform umfasst das Spülenzubehörteil 112 zusätzlich eine erste Stirnseiten-Kopplungsvorrichtung 158a zum Ankoppeln des Spülenzubehörteils 112 an die Kopplungs-Seitenwand 122 und eine zweite Stirnseiten-Kopplungsvorrichtung 158b zum Ankoppeln des Spülenzubehörteils 112 an die der Kopplungs-Seitenwand 122 gegenüberliegende Seitenwand 120b in einer Querstellung, in welcher die Längsrichtung 142 des Spülenzubehörteils 112 um einen Winkel von 90° gegenüber der Arbeitsstellung, in welcher das Spülenzubehörteil 112 mittels der Kopplungsvorrichtung 156 an die Kopplungs-Seitenwand 122 gekoppelt ist, gedreht ist.

Die erste Stirnseiten-Kopplungsvorrichtung 158a umfasst erste Stirnseiten-Anlageflächen 160a an den in Fig. 18 rechts dargestellten Endbereichen der äußeren Kopplungselemente 136.

Die zweite Stirnseiten-Kopplungsvorrichtung 158b umfasst zweite Stirnseiten-Anlageflächen 160b, welche an den in Fig. 18 links dargestellten Endbereichen der äußeren Kopplungselemente 136 angeordnet sind.

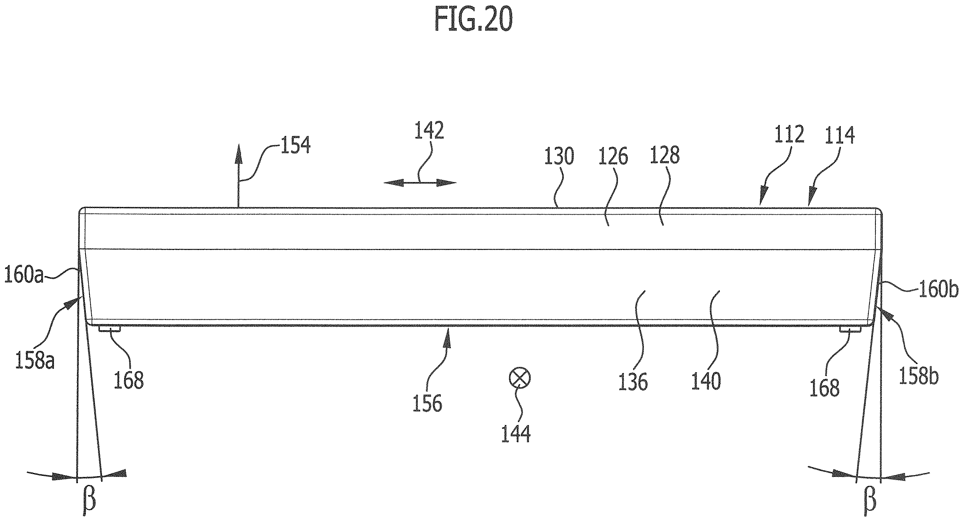

Wie am besten aus der Seitenansicht des Spülenzubehörteils 112 in Fig. 20 zu ersehen ist, sind die Stirnseiten-Anlageflächen 160a, 160b um einen Winkel β gegenüber der Normalenrichtung 154 der Auflagefläche 130 des Spülenzubehörteils 112 und damit gegenüber der Vertikalen geneigt, wenn die Auflagefläche 130 des Spülenzubehörteils 112 horizontal ausgerichtet ist.

Der Winkel β ist dabei vorzugsweise im Wesentlichen gleich groß wie der Winkel α, um welchen die inneren Anlageflächen 150 der inneren Kopplungselemente 134 der Kopplungsvorrichtung 156 gegenüber der Normalenrichtung 154 der Auflagefläche 130 beziehungsweise gegenüber der Vertikalen geneigt sind, wenn die Auflagefläche 130 des Spülenzubehörteils 112 horizontal ausgerichtet ist.

Der Winkel β beträgt ferner vorzugsweise mindestens ungefähr 1°, insbesondere mindestens ungefähr 3°, besonders bevorzugt mindestens ungefähr 6°, und/oder vorzugsweise höchstens ungefähr 20°, insbesondere höchstens ungefähr 10°, besonders bevorzugt höchstens ungefähr 8°.

Die geneigten Stirnseiten-Anlageflächen 160a, 160b können beispielsweise durch einen Fräsvorgang an den äußeren Kopplungselementen 136 erzeugt werden.

Wie am besten aus den Fig. 18 und 19 zu ersehen ist, sind Endbereiche 162 der Unterseiten 164 der äußeren Kopplungselemente 136 des Spülenzubehörteils 112 mit jeweils mindestens einer Ausnehmung 166 versehen, in welcher jeweils ein Abstützelement 168 zumindest teilweise aufgenommen ist.

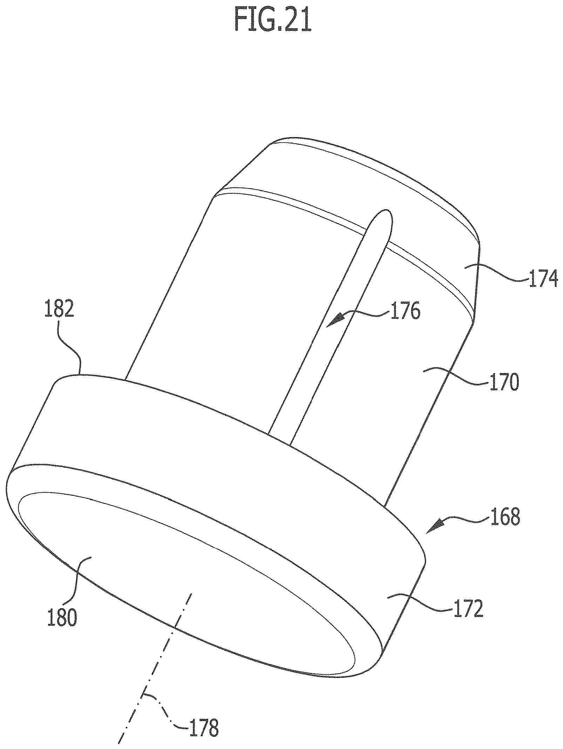

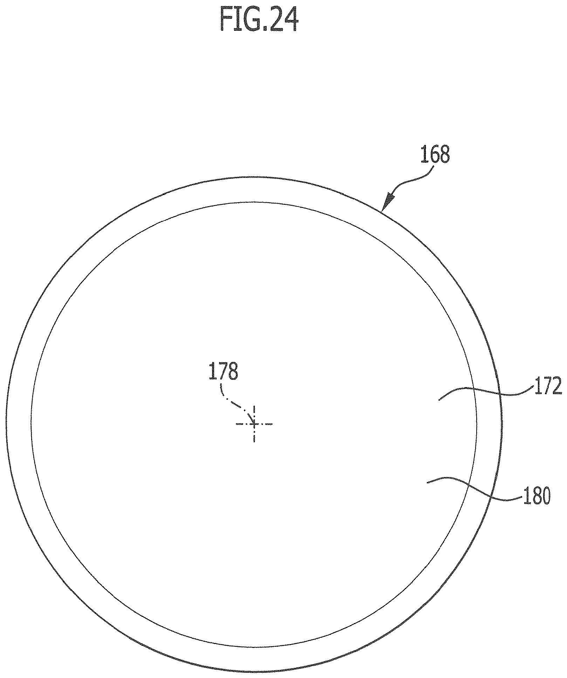

Ein solches Abstützelement 168 ist in den Fig. 21 bis 24 einzeln dargestellt.

Das Abstützelement 168 umfasst einen im Wesentlichen zylindrischen Schaft 170, der einen ebenfalls im Wesentlichen zylindrischen Kopf 172 trägt, welcher einen größeren Außendurchmesser aufweist als der Schaft 170.

Der dem Kopf 172 abgewandte Endbereich des Schaftes 170 ist mit einer Anfasung 174 versehen.

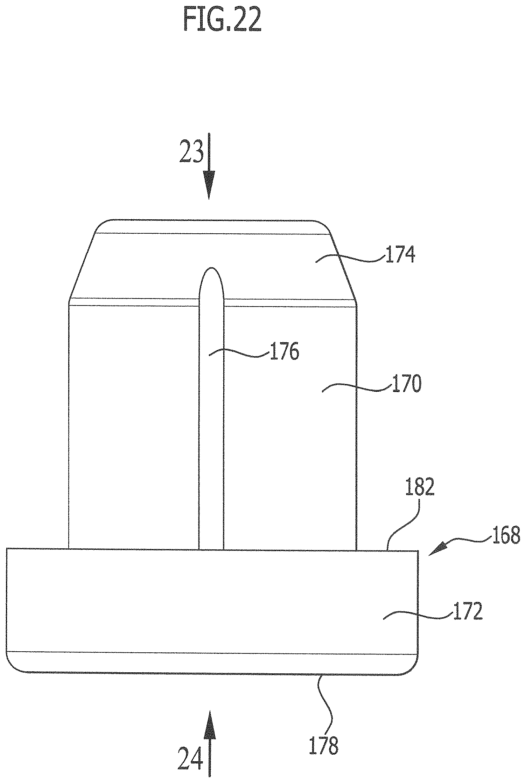

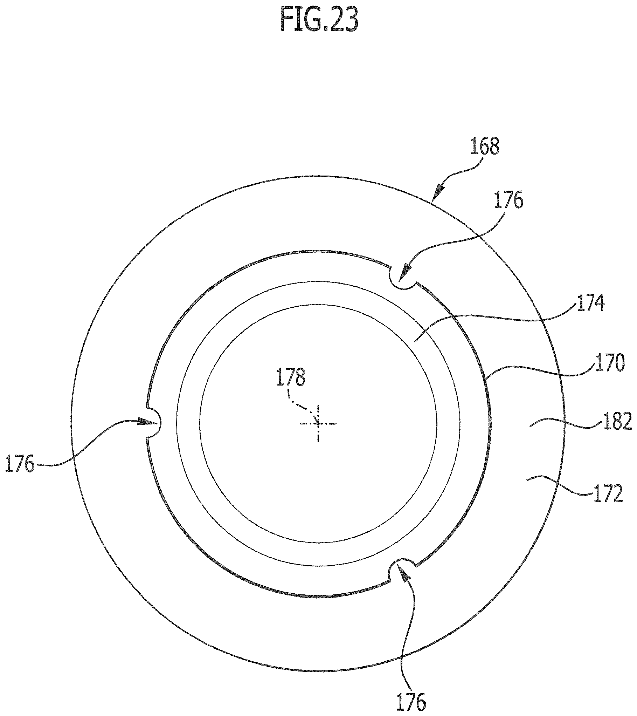

Wie am besten aus den Fig. 22 und 23 zu ersehen ist, erstrecken sich mehrere Nuten 176, beispielsweise drei Nuten 176, von einem dem Kopf 172 zugewandten Endbereich des Schaftes 170 parallel zur Längsmittelachse 178 des Abstützelements 168 bis in den Bereich der Anfasung 174 hinein.

Die Nuten 176 sind vorzugsweise in der Umfangsrichtung des Schaftes 170 im Wesentlichen äquidistant um die Längsmittelachse 178 des Abstützelements 168 verteilt.

Der Kopf 172 des Abstützelements 168 weist eine dem Schaft 170 abgewandte Stirnfläche 180 auf, deren Außenkante abgerundet sein kann.

Das Abstützelement 168 aus Schaft 170 und Kopf 172 ist vorzugsweise einstückig ausgebildet.

Das Abstützelement 168 ist vorzugsweise aus einem reibungserhöhenden Material ausgebildet.

Das Abstützelement 168 kann aus einem Kunststoffmaterial, insbesondere aus einem Elastomermaterial, beispielsweise aus einem Silikonmaterial, gebildet sein.

Das Abstützelement 168 wird vorzugsweise separat von den äußeren Kopplungselementen 136 des Spülenzubehörteils 112 hergestellt und später an den äußeren Kopplungselementen 136 festgelegt, wobei der Schaft 170 des Abstützelements 168 in der jeweils zugeordneten Ausnehmung 166 in einem der Endbereiche 162 der Unterseite 164 der äußeren Kopplungselemente 136 aufgenommen wird und der Kopf 172 des jeweiligen Abstützelements 168 über die jeweilige Ausnehmung 166 hinaus vorsteht.

Dabei liegt eine in radialer Richtung der Längsmittelachse 178 des Abstützelements 168 über den Schaft 170 überstehende Anlagefläche 182 des Kopfes 172 des Abstützelements 168 vorzugsweise an dem die Ausnehmung 166 umgebenden Bereich der jeweiligen Unterseite 164 eines äußeren Kopplungselements 136 an.

Die Festlegung des Abstützelements 168 an dem jeweiligen Kopplungselement 136 kann beispielsweise durch Presspassung und/oder durch Verklebung erfolgen.

Alternativ hierzu kann auch vorgesehen sein, dass das Abstützelement 168 *in situ* an dem Kopplungselement 136 erzeugt wird, beispielsweise durch einen Anspritzvorgang, aus einem spritzgießfähigen Material.

Das Spülenzubehörteil 112 kann in die in den Fig. 1 bis 6 dargestellte Längsstellung oder Arbeitsstellung an dem Becken 110 gebracht werden, in welcher das Spülenzubehörteil 112 mittels der Kopplungsvorrichtung 156 an die Kopplungs-Seitenwand 122 angekoppelt ist, indem das Spülenzubehörteil 112 von oben an das Becken 110 herangeführt wird, bis ein oberer Randbereich 184 der Kopplungs-Seitenwand 122 in die von einem äußeren Kopplungselement 136 und einem inneren Kopplungselement 134 begrenzte Aufnahme 146 des Spülenzubehörteils 112 eintaucht.

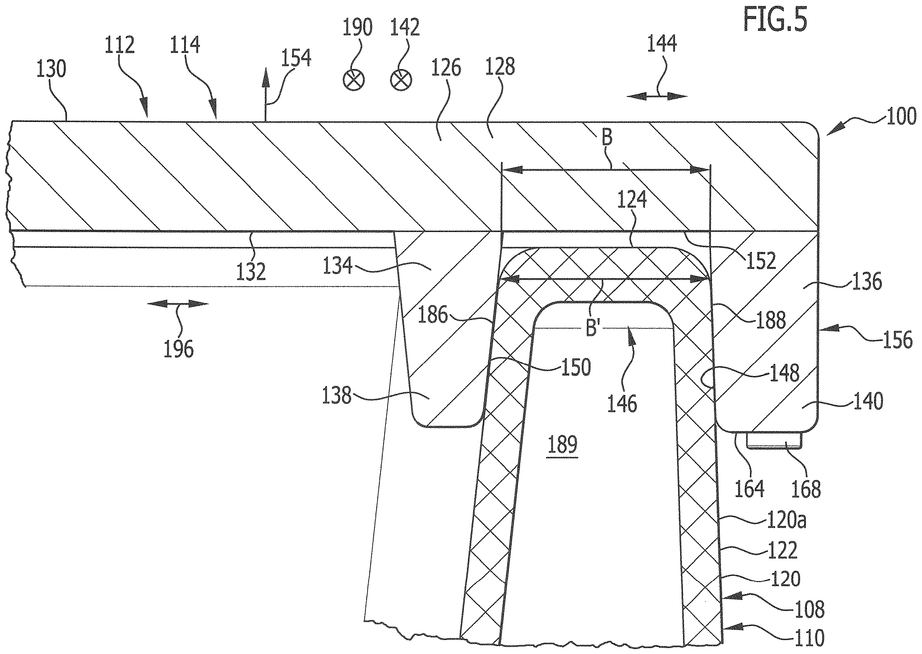

Wie am besten aus dem Querschnitt in Fig. 5 zu ersehen ist, verjüngt sich der obere Randbereich 184 der Kopplungs-Seitenwand 122 nach oben hin bis zu dem Beckenrand 124, welcher eine Breite B' aufweist, welcher geringer ist als der Abstand B zwischen der inneren Anlagefläche 150 und der äußeren Anlagefläche 148 der Kopplungselemente 134, 136 an der Unterseite 132 des Grundkörpers 126.

Wenn das Spülenzubehörteil 112 so weit auf die Kopplungs-Seitenwand 122 aufgesetzt ist, dass die innere Anlagefläche 150 des inneren Kopplungselements 134 an der Innenseite 186 der Kopplungs-Seitenwand 122 anliegt und die äußere Anlagefläche 148 des äußeren Kopplungselements 136 an der Außenseite 188 der Kopplungs-Seitenwand 122 anliegt, ist daher der die äußere Anlagefläche 148 und die innere Anlagefläche 150 miteinander verbindende Bereich 152 der Unterseite 132 des Grundkörpers 126 von der Kopplungs-Seitenwand 122 des Beckens 110 beabstandet.

Hierdurch wird erreicht, dass Fertigungstoleranzen des Beckens 110 und/oder des Spülenzubehörteils 112 durch den zwischen der Unterseite 132 des Grundkörpers 126 des Spülenzubehörteils 112 und dem Beckenrand 124 des Beckens 110 verbleibenden Freiraum ausgeglichen werden können.

Die Innenseite 186 der Kopplungs-Seitenwand 122 und/oder die Außenseite 188 der Kopplungs-Seitenwand 122 weisen in dem oberen Randbereich 184 der Kopplungs-Seitenwand 122 vorzugsweise im Wesentlichen dieselbe Neigung gegenüber der Vertikalen (im montierten Zustand der Spüle 108) auf wie die innere Anlagefläche 150 des inneren Kopplungselements 134 beziehungsweise wie die äußere Anlagefläche 148 des äußeren Kopplungselements 136, wenn die Auflagefläche 130 des Spülenzubehörteils 112 horizontal ausgerichtet ist.

Hierdurch wird eine flächige Anlage der Kopplungselemente 134 beziehungsweise 136 an der Innenseite 186 beziehungsweise an der Außenseite 188 der Kopplungs-Seitenwand 122 des Beckens 110 erreicht.

Die Kopplungs-Seitenwand 122 kann, wie dargestellt, einen zwischen der Innenseite 186 und der Außenseite 188 angeordneten Hohlraum 189 aufweisen. Alternativ hierzu kann die Kopplungs-Seitenwand 122 massiv ausgebildet sein.

In der in den Fig. 1 bis 6 dargestellten Arbeitsstellung des Spülenzubehörteils 112 ist die Längsrichtung 142 des Spülenzubehörteils 112 parallel zur Längsrichtung 190 der Spüle 108 ausgerichtet, längs welcher sich die Kopplungs-Seitenwand 122 erstreckt.

In dieser Arbeitsstellung ragt der Teil des Spülenzubehörteils 112, welcher auf derjenigen Seite des mit der Kopplungs-Seitenwand 122 in Kontakt stehenden inneren Kopplungselements 134 angeordnet ist, welche dem äußeren Kopplungselement 136, das in Kontakt mit der Kopplungs-Seitenwand 122 steht, abgewandt ist, und welcher den Schwerpunkt 192 des Spülenzubehörteils 112 beinhaltet, über den Innenraum 194 des Beckens 110 vor, ohne auf der der Kopplungs-Seitenwand 122 gegenüberliegenden Seitenwand 120b des Beckens 110 oder auf der diese Seitenwand 120b überdeckenden Arbeitsplatte 102 aufzuliegen.

Dabei verhindert der Formschluss zwischen der Kopplungsvorrichtung 156 (umfassend das innere Kopplungselement 134 und das äußere Kopplungselement 136) mit der Kopplungs-Seitenwand 122, dass das Spülenzubehörteil 112 aus der Arbeitsstellung, in welcher die Auflagefläche 130 des Spülenzubehörteils 112 horizontal ausgerichtet ist, in den Innenraum 194 des Beckens abkippt.

Der Formschluss zwischen der Kopplungsvorrichtung 156 und der Kopplungs-Seitenwand 122 verhindert ferner, dass das Spülenzubehörteil 112 in der senkrecht zur Längsrichtung 190 der Spüle 108 verlaufenden, im montierten Zustand der Spüle 108 horizontal ausgerichteten Querrichtung 196 der Spüle 108 relativ zu dem Becken 110 verschoben wird.

Das Spülenzubehörteil 112 kann aber in der Längsrichtung 190 der Spüle 108 relativ zu dem Becken 110 verschoben werden, insbesondere durch Abgleiten der äußeren Anlagefläche 148 und der inneren Anlagefläche 150 an der Außenseite 188 beziehungsweise an der Innenseite 186 der Kopplungs-Seitenwand 122.

Das Spülenzubehörteil 112 ist vorzugsweise symmetrisch bezüglich einer durch den Schwerpunkt 192 und senkrecht zur Auflagefläche 130 verlaufenden Rotationsachse ausgebildet, so dass das Spülenzubehörteil 112 auch in einer um die Rotationsachse um einen Winkel von 180° gedrehten zweiten Arbeitsstellung an dem Becken 110 angeordnet werden kann, in welcher dann die in der ersten Arbeitsstellung nicht genutzten Kopplungselemente 134, 136 in Kontakt mit der Kopplungs-Seitenwand 122 stehen.

Alternativ zu der Anordnung des Spülenzubehörteils 112 in der Längsstellung oder Arbeitsstellung an dem Becken 110 kann das Spülenzubehörteil 112 in die in den Fig. 7 bis 12 dargestellte, mittels der Stirnseiten-Kopplungsvorrichtung 158a und 158b an die Kopplungs-Seitenwand 122 beziehungsweise an die gegenüberliegende Seitenwand 120b angekoppelte Querstellung gebracht werden, indem das Spülenzubehörteil 112 von oben in das Becken 110 eingeführt wird, bis die Stirnseiten-Anlageflächen 160a, 160b der Stirnseiten-Kopplungsvorrichtungen 158a, 158b an der Innenseite 186 der Kopplungs-Seitenwand 122 beziehungsweise an der Innenseite 186 der der Kopplungs-Seitenwand 122 gegenüberliegenden Seitenwand 120b anliegen. Diese Verwendung des Spülenzubehörteils ist nicht beansprucht.

In dieser angekoppelten Stellung des Spülenzubehörteils 112 sind die Abstützelemente 168 von dem Bodenbereich 116 des Beckens 110 beabstandet, so dass das Spülenzubehörteil 112 in der angekoppelten Stellung nicht in Kontakt mit dem Bodenbereich 116 steht.

Ferner steht das Spülenzubehörteil 112 in dieser Querstellung nicht in Kontakt mit dem Beckenrand 124 des Beckens 110 und auch nicht in Kontakt mit der Arbeitsplatte 102.

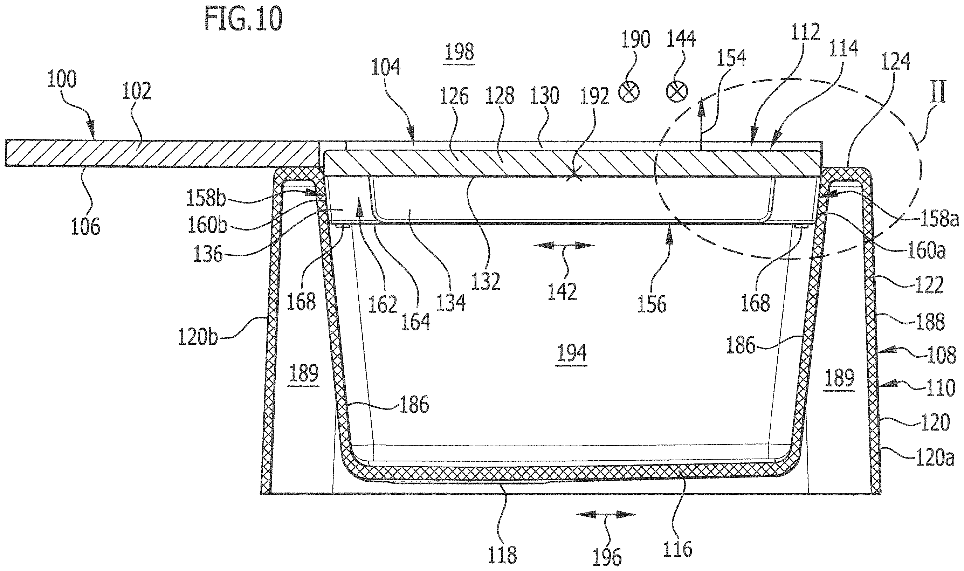

Wie aus Fig. 10 zu ersehen ist, ist das Spülenzubehörteil 112 bei dieser Ausführungsform in seiner an die Kopplungs-Seitenwand 122 und an die gegenüberliegende Seitenwand 120b des Beckens 110 angekoppelten Stellung nur teilweise in dem Innenraum 194 des Beckens 110 aufgenommen.

Dabei befinden sich die Kopplungselemente 134, 136 des Spülenzubehörteils 112 mit den daran angeordneten Stirnseiten-Kopplungsvorrichtungen 158a, 158b in der angekoppelten Stellung im Innenraum 194 des Beckens 110, während zumindest ein Teil des Grundkörpers 126 über die oberen Ränder der Seitenwände 120 nach oben in einen Außenraum 198 des Beckens 110 übersteht.

Das Spülenzubehörteil 112 ist in der an das Becken 110 angekoppelten Querstellung zwischen der Kopplungs-Seitenwand 122 und der gegenüberliegenden Seitenwand 120b vorzugsweise sowohl durch Formschluss als auch durch den Kraftschluss der Stirnseiten-Anlageflächen 160a, 160b mit den Seitenwänden 122, 120b fest arretiert oder fixiert.

Da der Abstand zwischen der Kopplungs-Seitenwand 122 und der gegenüberliegenden Seitenwand 120b sich in dem unterhalb des Spülenzubehörteils 112 in der Querstellung liegenden Bereich verringert, kann das Spülenzubehörteil 112 aus seiner angekoppelten Stellung nicht weiter nach unten, zum Bodenbereich 116 des Beckens 110 hin, bewegt werden.

Durch den Kraftschluss zwischen den Stirnseiten-Kopplungsvorrichtungen 158a, 158b und den Seitenwänden 122, 120b kann das Spülenzubehörteil 112, wenn es einmal an die Seitenwände 122, 120b gekoppelt ist, auch nicht mehr in seiner Querrichtung 144 relativ zu dem Becken 110 in horizontaler Richtung bewegt werden.

Damit ist eine sichere und stabile Arretierung des Spülenzubehörteils 112 in dessen angekoppelter Stellung an dem Becken 110 der Spüle 108 gewährleistet.

Um das Spülenzubehörteil 112 aus seiner an das Becken 110 angekoppelten Stellung zu entnehmen, muss eine Haltekraft überwunden werden.

Unter Anwendung einer nach oben gerichteten Kraft und unterstützt durch eine geringfügige elastische Verformung der Stirnseiten-Anlageflächen 160a, 160b und/oder des Beckens 110 kann das Spülenzubehörteil 112 wieder aus seiner an das Becken 110 angekoppelten Stellung entnommen werden.

Mittels der Abstützelemente 168 kann das Spülenzubehörteil 112 auf eine (nicht dargestellte) Abtropffläche der Spüle 108 oder auf einen anderen Untergrund, beispielsweise auf eine Tischplatte, abgestellt werden.

## Patentansprüche

1. Verwendung eines Spülenzubehörteils (112) zum Anordnen an einer Spüle (108) mit mindestens einem Becken (110) in einer Arbeitsstellung, wobei das Spülenzubehörteil (112) eine Kopplungsvorrichtung (156) zum Ankoppeln des Spülenzubehörteils (112) an eine Kopplungs-Seitenwand (122) eines Beckens (110) der Spüle (108) in der Arbeitsstellung umfasst,
wobei die Kopplungsvorrichtung (156) ein inneres Kopplungselement (134), das in der Arbeitsstellung an eine dem Innenraum (194) des Beckens (110) zugewandte Innenseite (186) der Kopplungs-Seitenwand (122) angelegt ist, und ein äußeres Kopplungselement (136), das in der Arbeitsstellung an eine dem Innenraum (194) des Beckens (110) abgewandte Außenseite (188) der Kopplungs-Seitenwand (122) angelegt ist, umfasst,
wobei das Spülenzubehörteil (112) in der Arbeitsstellung mittels der Kopplungsvorrichtung (156) nur an die Kopplungs-Seitenwand (122) des Beckens (110) der Spüle (108) gekoppelt ist,
wobei das innere Kopplungselement (134) und das äußere Kopplungselement (136) an einem Grundkörper (126) des Spülenzubehörteils (112) angeordnet sind, welcher eine Auflagefläche (130) aufweist, und wobei das Spülenzubehörteil (112) als ein Schneidbrett (114) ausgebildet ist,
**dadurch gekennzeichnet,**
**dass** der Teil des Spülenzubehörteils (112), welcher auf derjenigen Seite des inneren Kopplungselements (134) angeordnet ist, welche dem äußeren Kopplungselement (136) abgewandt ist, den Schwerpunkt des Spülenzubehörteils (112) beinhaltet und
**dass** die Auflagefläche (130) des Grundkörpers (126) in der Arbeitsstellung des Spülenzubehörteils (112) horizontal ausgerichtet ist.

2. Verwendung nach Anspruch 1, **dadurch gekennzeichnet, dass** das innere Kopplungselement (134) in der Arbeitsstellung im Wesentlichen flächig an der Innenseite (186) der Kopplungs-Seitenwand (122) anliegt und/oder dass das äußere Kopplungselement (136) in der Arbeitsstellung im Wesentlichen flächig an der Außenseite (188) der Kopplungs-Seitenwand (122) anliegt.

3. Verwendung nach einem der Ansprüche 1 oder 2, **dadurch gekennzeichnet, dass** das innere Kopplungselement (134) und/oder das äußere Kopplungselement (136) als eine sich in einer Längsrichtung (142) des Spülenzubehörteils (112) erstreckende Leiste (138, 140) ausgebildet ist.

4. Verwendung nach einem der Ansprüche 1 bis 3, **dadurch gekennzeichnet, dass** das innere Kopplungselement (134) eine innere Anlagefläche (150) aufweist und das äußere Kopplungselement (136) eine äußere Anlagefläche (148) aufweist, wobei die innere Anlagefläche (150) und die äußere Anlagefläche (148) so zueinander geneigt sind, dass der Abstand zwischen der inneren Anlagefläche (150) und der äußeren Anlagefläche (148) mit abnehmendem Abstand von dem Grundkörper (126) abnimmt.

5. Verwendung nach Anspruch 4, **dadurch gekennzeichnet, dass** die innere Anlagefläche (150) und/oder die äußere Anlagefläche (148) gegenüber einer Normalenrichtung (154) der Auflagefläche (130) des Grundkörpers (126) geneigt ist.

6. Verwendung nach einem der Ansprüche 1 bis 5, **dadurch gekennzeichnet, dass** das Spülenzubehörteil (112) ein zweites inneres Kopplungselement (134), das in einer zweiten Arbeitsstellung, in welcher das Spülenzubehörteil (112) gegenüber der ersten Arbeitsstellung um einen Winkel von 180° gedreht ist, an der Innenseite der Kopplungs-Seitenwand (122) anliegt, und ein zweites äußeres Kopplungselement (136), das in der zweiten Arbeitsstellung an der Außenseite (188) der Kopplungs-Seitenwand (122) anliegt, umfasst.

7. Verwendung nach einem der Ansprüche 1 bis 6, **dadurch gekennzeichnet, dass** das Spülenzubehörteil (112) in einer Querstellung, in welcher die Längsrichtung (142) des Spülenzubehörteils (112) um einen Winkel von 90° gegenüber der Arbeitsstellung gedreht ist, an dem Becken (110) der Spüle (108) anordenbar ist.

8. Verwendung nach Anspruch 7, **dadurch gekennzeichnet, dass** das Spülenzubehörteil (112) eine erste Stirnseiten-Kopplungsvorrichtung (158a) zum Ankoppeln des Spülenzubehörteils (112) an die Kopplungs-Seitenwand (122) des Beckens (110) der Spüle (108) und eine zweite Stirnseiten-Kopplungsvorrichtung (158b) zum Ankoppeln des Spülenzubehörteils (112) an eine der Kopplungs-Seitenwand (122) des Beckens (110) gegenüberliegende zweite Seitenwand (120b) des Beckens (110) der Spüle (108) umfasst.

9. Verwendung nach Anspruch 8, **dadurch gekennzeichnet, dass** die erste Stirnseiten-Kopplungsvorrichtung (158a) mindestens eine erste Stirnseiten-Anlagefläche (160a) aufweist, welche in der Querstellung an der Innenseite (186) der Kopplungs-Seitenwand (122) des Beckens (110) anliegt, und die zweite Stirnseiten-Kopplungsvorrichtung (158b) mindestens eine zweite Stirnseiten-Anlagefläche (160b) aufweist, welche in der Querstellung an der Innenseite (186) der der Kopplungs-Seitenwand (122) gegenüberliegenden Seitenwand (120b) des Beckens (110) anliegt.

10. Verwendung nach Anspruch 9, **dadurch gekennzeichnet, dass** die erste Stirnseiten-Anlagefläche (160a) und/oder die zweite Stirnseiten-Anlagefläche (160b) gegenüber einer Normalenrichtung (154) der Auflagefläche (130) des Grundkörpers (126) des Spülenzubehörteils (112) geneigt ist.

11. Verwendung nach einem der Ansprüche 1 bis 10, **dadurch gekennzeichnet, dass** eine Unterseite (132) des Grundkörpers (126) einen dem Grundkörper (126) zugewandten oberen Rand des inneren Kopplungselements (134) und einen dem Grundkörper (126) zugeordneten oberen Rand des äußeren Kopplungselements (136) miteinander verbindet und dass die Unterseite (132) des Grundkörpers (126) in der Arbeitsstellung des Spülenzubehörteils (112) von der Kopplungs-Seitenwand (122) des Beckens (110) beabstandet ist.

## Claims

1. Use of a sink attachment (112) for arranging on a sink (108) with at least one basin (110) in a working position, wherein the sink attachment (112) comprises a coupling device (156) for coupling the sink attachment (112) to a coupling sidewall (122) of a basin (110) of the sink (108) in the working position,
wherein the coupling device (156) comprises an inner coupling element (134) that is seated, in the working position, on an inner side (186) of the coupling sidewall (122) facing the interior (194) of the basin (110) and comprises an outer coupling element (136) that is seated, in the working position, on an outer side (188) of the coupling sidewall (122) facing away from the interior (194) of the basin (110),
wherein the sink attachment (112) is coupled by means of the coupling device (156) only to the coupling sidewall (122) of the basin (110) of the sink (108) in the working position,
wherein the inner coupling element (134) and the outer coupling element (136) are arranged on a base body (126) of the sink attachment (112), the base body having a supporting surface (130), and
wherein the sink attachment (112) is configured as a cutting board (114),
**characterized in that**
the part of the sink attachment (112) which is arranged on that side of the inner coupling element (134) that faces away from the outer coupling element (136) contains the center of gravity of the sink attachment (112) and
**in that** the supporting surface (130) of the base body (126) is oriented horizontally in the working position of the sink attachment (112).

2. Use in accordance with Claim 1, **characterized in that** the inner coupling element (134) is seated, in the working position, substantially in surface-to-surface contact with the inner side (186) of the coupling sidewall (122) and/or **in that** the outer coupling element (136) is seated, in the working position, substantially in surface-to-surface contact with the outer side (188) of the coupling sidewall (122).

3. Use in accordance with either of Claims 1 or 2, **characterized in that** the inner coupling element (134) and/or the outer coupling element (136) is configured as a bar (138, 140) extending in a longitudinal direction (142) of the sink attachment (112).

4. Use in accordance with any one of Claims 1 to 3, **characterized in that** the inner coupling element (134) has an inner seating face (150) and the outer coupling element (136) has an outer seating face (148), wherein the inner seating face (150) and the outer seating face (148) are inclined relative to one another in such a way that the distance between the inner seating face (150) and the outer seating face (148) decreases with decreasing distance from the base body (126).

5. Use in accordance with Claim 4, **characterized in that** the inner seating face (150) and/or the outer seating face (148) is/are inclined relative to a normal direction (154) of the supporting surface (130) of the base body (126).

6. Use in accordance with any one of Claims 1 to 5, **characterized in that** the sink attachment (112) comprises a second inner coupling element (134) that is seated, in a second working position in which the sink attachment (112) is rotated by an angle of 180° relative to the first working position, on the inner side of the coupling sidewall (122), and comprises a second outer coupling element (136) that is seated, in the second working position, on the outer side (188) of the coupling sidewall (122).

7. Use in accordance with any one of Claims 1 to 6, **characterized in that** the sink attachment (112) is configured to be arranged on the basin (110) of the sink (108) in a transverse position, in which the longitudinal direction (142) of the sink attachment (112) is rotated by an angle of 90° relative to the working position.

8. Use in accordance with Claim 7, **characterized in that** the sink attachment (112) comprises a first face-side coupling device (158a) for coupling the sink attachment (112) to the coupling sidewall (122) of the basin (110) of the sink (108) and comprises a second face-side coupling device (158b) for coupling the sink attachment (112) to a second sidewall (120b) of the basin (110) of the sink (108) opposite to the coupling sidewall (122) of the basin (110).

9. Use in accordance with Claim 8, **characterized in that** the first face-side coupling device (158a) has at least one first face-side seating face (160a) which is seated, in the transverse position, on the inner side (186) of the coupling sidewall (122) of the basin (110), and the second face-side coupling device (158b) has at least one second face-side seating face (160b) which is seated, in the transverse position, on the inner side (186) of the sidewall (120b) of the basin (110) opposite to the coupling sidewall (122).

10. Use in accordance with Claim 9, **characterized in that** the first face-side seating face (160a) and/or the second face-side seating face (160b) is inclined relative to a normal direction (154) of the supporting surface (130) of the base body (126) of the sink attachment (112).

11. Use in accordance with any one of Claims 1 to 10, **characterized in that** an underside (134) of the base body (126) connects an upper rim of the inner coupling element (134) facing the base body (126) to an upper rim of the outer coupling element (136) facing the base body (126), and
**in that** the underside (132) of the base body (126) in the working position of the sink attachment (112) is spaced at a distance from the coupling sidewall (122) of the basin (110).

## Revendications

1. Utilisation d'un accessoire pour évier (112) destiné à être agencé contre un évier (108) avec au moins un bac (110) dans une position de travail, dans laquelle l'accessoire pour évier (112) comprend un dispositif de couplage (156) pour le couplage de l'accessoire pour évier (112) contre une paroi latérale de couplage (122) d'un bac (110) de l'évier (108) dans la position de travail,
dans laquelle le dispositif de couplage (156) comprend un élément de couplage intérieur (134) qui dans la position de travail est appliqué contre un côté intérieur (186) de la paroi latérale de couplage (122) tourné vers l'espace intérieur (194) du bac (110), et un élément de couplage extérieur (136) qui dans la position de travail est appliqué contre un côté extérieur (188) de la paroi latérale de couplage (122) détourné de l'espace intérieur (194) du bac (110),
dans laquelle l'accessoire pour évier (112) dans la position de travail est couplé uniquement contre la paroi latérale de couplage (122) du bac (110) de l'évier (108) au moyen du dispositif de couplage (156),
dans laquelle l'élément de couplage intérieur (134) et l'élément de couplage extérieur (136) sont agencés contre un corps de base (126) de l'accessoire pour évier (112), lequel présente une surface d'appui (130), et dans laquelle l'accessoire pour évier (112) est conçu en tant que planche à découper (114),
**caractérisé en ce que**
la partie de l'accessoire pour évier (112), laquelle est agencée sur le côté de l'élément de couplage intérieur (134) qui est détourné de l'élément de couplage extérieur (136), contient le centre de gravité de l'accessoire pour évier (112) et
la surface d'appui (130) du corps de base (126) dans la position de travail de l'accessoire pour évier (112) est orientée à l'horizontale.

2. Utilisation selon la revendication 1, **caractérisée en ce que** l'élément de couplage intérieur (134) dans la position de travail s'applique essentiellement à plat contre le côté intérieur (186) de la paroi latérale de couplage (122) et/ou **en ce que** l'élément de couplage extérieur (136) dans la position de travail s'applique essentiellement à plat contre le côté extérieur (188) de la paroi latérale de couplage (122).

3. Utilisation selon l'une des revendications 1 ou 2, **caractérisée en ce que** l'élément de couplage intérieur (134) et/ou l'élément de couplage extérieur (136) est conçu en tant que baguette (138, 140) s'étendant dans une direction longitudinale (142) de l'accessoire pour évier (112).

4. Utilisation selon l'une des revendications 1 à 3, **caractérisée en ce que** l'élément de couplage intérieur (134) présente une surface d'appui intérieure (150) et l'élément de couplage extérieur (136) présente une surface d'appui extérieure (148), dans laquelle la surface d'appui intérieure (150) et la surface d'appui extérieure (148) sont inclinées l'une vers l'autre de sorte que la distance entre la surface d'appui intérieure (150) et la surface d'appui extérieure (148) décroisse avec une distance décroissante depuis le corps de base (126).

5. Utilisation selon la revendication 4, **caractérisée en ce que** la surface d'appui intérieure (150) et/ou la surface d'appui extérieure (148) est inclinée par rapport à une direction normale (154) de la surface d'appui (130) du corps de base (126).

6. Utilisation selon l'une des revendications 1 à 5, **caractérisée en ce que** l'accessoire pour évier (112) comprend un second élément de couplage intérieur (134) qui, dans une seconde position de travail dans laquelle l'accessoire pour évier (112) est tourné selon un angle de 180° par rapport à la première position de travail, s'applique contre le côté intérieur de la paroi latérale de couplage (122), et un second un élément de couplage extérieur (136) qui dans la seconde position de travail s'applique contre le côté extérieur (188) de la paroi latérale de couplage (122).

7. Utilisation selon l'une des revendications 1 à 6, **caractérisée en ce que** l'accessoire pour évier (112) peut être agencé contre le bac (110) de l'évier (108) dans une position transversale dans laquelle la direction longitudinale (142) de l'accessoire pour évier (112) est tournée selon un angle de 90° par rapport à la position de travail.

8. Utilisation selon la revendication 7, **caractérisée en ce que** l'accessoire pour évier (112) comprend un premier dispositif de couplage côté frontal (158a) pour le couplage de l'accessoire pour évier (112) contre la paroi latérale de couplage (122) du bac (110) de l'évier (108) et un second dispositif de couplage côté frontal (158b) pour le couplage de l'accessoire pour évier (112) contre une seconde paroi latérale (120b) du bac (110) de l'évier (108) opposée à la paroi latérale de couplage (122) du bac (110).

9. Utilisation selon la revendication 8, **caractérisée en ce que** le premier dispositif de couplage côté frontal (158a) présente au moins une première surface d'appui côté frontal (160a), laquelle s'applique dans la position transversale contre le côté intérieur (186) de la paroi latérale de couplage (122) du bac (110), et le second dispositif de couplage côté frontal (158b) présente au moins une seconde surface d'appui côté frontal (160b), laquelle s'applique dans la position transversale contre le côté intérieur (186) de la paroi latérale (120b) du bac (110) opposée à la paroi latérale de couplage (122).

10. Utilisation selon la revendication 9, **caractérisée en ce que** la première surface d'appui côté frontal (160a) et/ou la seconde surface d'appui côté frontal (160b) est inclinée par rapport à une direction normale (154) de la surface d'appui (130) du corps de base (126) de l'accessoire pour évier (112).

11. Utilisation selon l'une des revendications 1 à 10, **caractérisée en ce qu'**un côté inférieur (132) du corps de base (126) relie ensemble un bord supérieur, de l'élément de couplage intérieur (134), tourné vers le corps de base (126) et un bord supérieur, de l'élément de couplage extérieur (136), attribué au corps de base (126) et **en ce que** le côté inférieur (132) du corps de base (126) dans la position de travail de l'accessoire pour évier (112) est à distance de la paroi latérale de couplage (122) du bac (110).
